# FASCICULE DE BREVET EUROPEEN

(11) **EP 2 391 667 B1**
(45) Date de publication et mention de la délivrance du brevet: **01.01.2020**
(21) Numéro de dépôt: 10708264.6
(22) Date de dépôt: 02.02.2010
(51) Int. Cl.: C08G 69/04, C08G 69/02, C08G 69/40, C08G 81/00, C08L 87/00, C08L 101/12

(54) **PROCEDE DE SYNTHESE D'UN ALLIAGE DE COPOLYMERE A BLOCS PRESENTANT DES PROPRIETES ANTISTATIQUES AMELIOREES**
VERFAHREN ZUR HERSTELLUNG EINES BLOCKCOPOLYMERS MIT VERBESSERTEN ANTISTATISCHEN EIGENSCHAFTEN
METHOD FOR SYNTHESISING A BLOCK COPOLYMER ALLOY HAVING IMPROVED ANTISTATIC PROPERTIES

(30) Priorité: 02.02.2009 FR 0950637
(43) Date de publication de la demande: 07.12.2011
(60) Demande divisionnaire: 12171820.9
(73) Titulaire: Arkema France, 92700 Colombes (FR)
(72) Inventeur: MALET, Frédéric, F-76000 Rouen (FR); GAMACHE, Eric, Philadelphie Pennsylvania 19107 (US); BABIN, Perrine, F-27300 Bernay (FR); ANDRE, Benoît, F-27000 Evreux (FR); WERTH, Michael, F-27300 Bernay (FR)
(86) Numéro de dépôt international: PCT/FR2010/050164
(87) Numéro de publication internationale: WO 2010/086574

(56) Documents cités:
- EP-A1- 1 273 629
- JP-A- 7 145 368
- JP-A- 2002 146 212
- JP-A- 2004 217 931
- JP-A- 2008 274 029
- JP-A- 2008 297 418
- US-A1- 2009 030 122
- SHADPOUR MALLAKPOUR ET AL: "Ionic liquid catalyzed synthesis of organosoluble wholly aromatic optically active polyamides", POLYMER BULLETIN, SPRINGER, BERLIN, DE, vol. 62, no. 5, 29 janvier 2009 (2009-01-29), pages 605-614, XP019708741, ISSN: 1436-2449
- LOZINSKAYA E I ET AL: "Direct polycondensation in ionic liquids", EUROPEAN POLYMER JOURNAL, PERGAMON PRESS LTD. OXFORD, GB LNKD- DOI:10.1016/J.EURPOLYMJ.2004.05.010, vol. 40, no. 9, 1 septembre 2004 (2004-09-01), pages 2065-2075, XP004523626, ISSN: 0014-3057
- MALLAKPOUR ET AL: "Use of ionic liquid and microwave irradiation as a convenient, rapid and eco-friendly method for synthesis of novel optically active and thermally stable aromatic polyamides containing N-phthaloyl-l-alanine pendent group", POLYMER DEGRADATION AND STABILITY, BARKING, GB, vol. 93, no. 4, 7 février 2008 (2008-02-07), pages 753-759, XP022559024, ISSN: 0141-3910

## Description

### Domaine de l'invention

La présente invention se rapporte aux polymères thermoplastiques élastomères (abrégé TPE), et notamment les polymères techniques de haute valeur ajoutée utilisés dans des secteurs variés, tels que l'électronique, l'automobile ou le sport. La présente invention concerne plus particulièrement les matériaux polymères thermoplastiques élastomères comprenant au moins un bloc polyamide, tels que des copolymères à blocs polyéther et à blocs polyamide (PEBA), et ayant des propriétés antistatiques améliorées. L'invention a également pour objet un nouveau procédé d'obtention de tels élastomères thermoplastiques à propriétés antistatiques améliorées, et leur utilisation dans tout type de matrice polymère thermoplastique afin d'apporter des propriétés antistatiques à cette matrice.

Par polymère thermoplastique élastomère (TPE), on entend un copolymère à blocs comprenant, en alternance, des blocs ou segments dits durs ou rigides (au comportement plutôt thermoplastique) et des blocs ou segments dits souples ou flexibles (au comportement plutôt élastomère).

Dans la suite du texte, on entend par « alliage à base d'élastomère thermoplastique à blocs polyamide », ou par « alliage à base d'élastomère thermoplastique sur base polyamide », ou encore par « alliage à base de copolymère à blocs comprenant au moins un bloc rigide polyamide », tout matériau polymère composé à plus de 50% en poids, de préférence d'au moins 70% en poids, d'au moins un copolymère à blocs comprenant au moins un bloc polyamide (homopolyamide ou copolyamide). Un élastomère thermoplastique comprenant au moins un bloc polyamide est ci-après abrégé TPE-A ; et un alliage à base d'élastomère thermoplastique comprenant du polyamide est ci-après abrégé « alliage TPE-A ». Un tel alliage peut comprendre en outre tout autre polymère différent d'un TPE-A, mais aussi des charges, des additifs, des adjuvants, des plastifiants, et/ou tout autre composant, compatible ou non, couramment utilisé dans les matériaux polymères.

Par matrice polymère thermoplastique, on entend tout matériau polymère thermoplastique susceptible d'incorporer un alliage TPE-A selon l'invention. Les polymères thermoplastiques sont bien connus de l'homme du métier et comprennent notamment les polyoléfines (polyéthylène, polypropylène...), le polychlorure de vinyle, le polyéthylène téréphtalate, le polystyrène, les polyamides, les acryliques.

La propriété antistatique d'un polymère est principalement caractérisée par sa résistivité superficielle qui est exprimée en ohm/carré et mesurée selon la norme ASTM D257. Par alliage TPE-A à propriétés antistatiques améliorées, on entend une diminution d'au moins une décade (en ohm/carré) de la résistivité superficielle dudit alliage TPE-A grâce au procédé de synthèse selon l'invention.

### Technique antérieure

La formation et la rétention de charges d'électricité statique à la surface de la plupart des matières plastiques sont connues. Par exemple, la présence d'électricité statique sur des films thermoplastiques conduit ces films à se coller les uns sur les autres rendant leur séparation difficile. La présence d'électricité statique sur des films d'emballage peut provoquer l'accumulation de poussières sur les objets à emballer et ainsi gêner leur utilisation. L'électricité statique peut aussi endommager des microprocesseurs ou des constituants de circuits électroniques. L'électricité statique peut en outre provoquer la combustion ou l'explosion de matières inflammables telles que, par exemple, les billes de polystyrène expansible qui contiennent du pentane.

Des agents antistatiques pour polymères sont décrits dans l'art antérieur. Il s'agit généralement de surfactants ioniques du type amines éthoxylées ou sulfonates qu'on ajoute aux polymères. Cependant, les propriétés antistatiques des polymères incorporant ces surfactants dépendent de l'humidité ambiante et elles ne sont donc pas permanentes. En effet, ces surfactants ont tendance à migrer à la surface des polymères puis à disparaître.

Les copolymères à blocs polyamides et blocs hydrophiles forment d'autres agents antistatiques qui ont l'avantage de ne pas migrer. Leurs propriétés antistatiques sont permanentes et indépendantes de l'humidité ambiante. On peut citer notamment les brevets JP60023435 A, EP242158, WO0110951, EP1046675 et EP829520, qui décrivent des substrats polymères rendus antistatiques par ajout d'un copolymère à blocs polyéther et blocs polyamide dans leur composition.

Plus récemment, des compositions polymères antistatiques ont été fabriquées, en mélangeant un polymère avec du liquide ionique. Les procédés existants de préparation de matériau antistatique à base de polymères se font en deux temps : synthèse du polymère puis incorporation de liquide ionique audit polymère déjà formé.

Le brevet Sanyo JP2004217931 décrit une composition antistatique obtenue par mélange ou malaxage d'un polymère à blocs polyéther avec un liquide ionique. Ledit liquide ionique a une conductivité comprise dans la gamme allant de 1 à 200 mS/cm, un point de fusion inférieur à la température ambiante et ledit polymère à blocs présente une absorption d'eau comprise dans la gamme allant de 10 à 150% ce qui exclut l'utilisation de polymères de faible reprise en humidité dans ces compositions antistatiques. Ce type de mélange d'un liquide ionique avec un polymère par malaxage ou cisaillement (notamment par calandrage ou extrusion...) est une étape coûteuse en énergie, qui est susceptible d'altérer les propriétés mécaniques du polymère auquel du liquide ionique est mélangé.

Le brevet EP1519988 décrit une composition polymère qui comprend un liquide ionique ayant un rôle de plastifiant. Un des procédés décrits dans cette demande comprend la mise en contact d'un polymère existant avec un liquide ionique. Dans cette demande, l'addition de liquide ionique entraîne une diminution de la température de transition vitreuse (Tg) du polymère obtenu, donc une altération de ses propriétés physico-chimiques et mécaniques. Le polymère ainsi additionné de liquide ionique est alors rendu inutilisable pour les applications où ces propriétés mécaniques sont requises.

La demande de brevet aux Etats-Unis d'Amérique US 2009/0030122 concerne une composition de résine thermoplastique antistatique comprenant de 0,01 à 20 parties en poids d'un agent conducteur ionique organique mélangé avec 100 parties en poids d'une composition de résine thermoplastique constituée de 97 à 55 parties en poids d'une résine à base de styrène et de 3 à 45 parties en poids d'un copolymère contenant des unités oxyde d'alcène en tant que composants.

La demande de brevet au Japon JP2008297418 concerne une composition de résine antistatique comprenant un polymère à blocs A ayant une structure telle que les blocs (a) et (b) sont de manière répétée et alternativement liés les uns aux autres par au moins un type de liaison sélectionné dans le groupe constitué d'une liaison ester, amido, éther et imido, où le bloc (a) est un bloc polyamide (al) ou polyoléfine (a2) et le bloc (b) est un bloc polyéther (b1) et/ou polyester (b2).

La demande de brevet européen EP1273629 concerne une composition antistatique contenant (A) un polyamide et/ou un élastomère polyamide, et (B) un sel métallique composé d'un cation qui est un métal alcalin ou un métal alcalinoterreux et d'un anion qui peut être formé par dissociation ionique, où la quantité de composant (B) est de 0,001 à 3,0 parties en poids sur la base de 100 parties en poids de composant (A).

La demande de brevet au Japon JP2008274029 concerne une résine antistatique ayant une partie de bloc (a) à base de polyamide, et une partie de bloc (b) à base de polyoxyéthylène, l'une au moins des liaisons étant sélectionnée dans le groupe constitué d'une liaison ester, amide, imide, uréthane et urée, où le poids moléculaire en nombre moyen de la partie de bloc à base de polyamide (a) est de 10 000 à 100 000 et la teneur en (b) est de 20 à 1 % en poids.

La demande de brevet au Japon JP2002146212 concerne un agent antistatique comprenant un ou plusieurs polymères (B) sélectionnés dans le groupe constitué des polyétheresters, des polyétheramides et des polyétheresteramides préparés en présence d'un agent actif de surface ionique (A).

La demande de brevet au Japon 07145368 concerne un agent antistatique contenant un polyétheresteramide obtenu en faisant réagir un polyamide ayant les deux extrémités moléculaires carboxylées et un polyoxyalcène glycol en présence d'un sel d'acide organique et d'hafnium et/ou de titane.

Durant la dernière décennie, les TPE, tels que les matériaux commercialisés par le Groupe ARKEMA sous la marque Pebax®, se sont progressivement imposés dans le domaine des composants électroniques, grâce à leurs propriétés mécaniques et notamment leur propriété de retour élastique exceptionnel. Dans ce type d'applications, les pièces doivent pouvoir résister à la fois à une haute pression et à une haute température pour ne pas risquer d'être endommagées, détériorées ou déformées, ni de voir leurs propriétés mécaniques modifiées.

La présente invention a donc pour but de fournir un procédé de fabrication d'un tel matériau à base de TPE-A ayant des propriétés antistatiques améliorées et qui soit facile à mettre en oeuvre, qui ne présente pas les inconvénients de l'art antérieur, qui présente le moins d'étapes possibles, et qui ne modifie pas de manière abusive les propriétés mécaniques du TPE-A.

La présente invention a également pour but de fournir un matériau TPE-A aux propriétés antistatiques permanentes, prêt à l'emploi et qui améliore les propriétés antistatiques des matrices polymères qui l'incorporent.

La demanderesse a démontré que, de manière surprenante, l'ajout d'au moins un sel organique, tel qu'un liquide ionique, directement pendant la polymérisation au cours de la synthèse d'un TPE-A, permet d'obtenir un alliage à base de TPE-A aux propriétés antistatiques améliorées et permanentes, voire même accélère la cinétique de polymérisation, tout en n'altérant pas les propriétés mécaniques du TPE-A obtenu.

### Résumé de l'invention

La présente invention a donc pour objet un procédé de synthèse d'un alliage à base de copolymère à blocs comprenant au moins un bloc rigide polyamide PA tel que défini dans la revendication 1.

Avantageusement, ledit au moins un sel organique comprend au moins un cation comprenant au moins une des molécules suivantes : ammonium, sulfonium, pyridinium, pyrrolidinium, imidazolium, imidazolinium, phosphonium, lithium, guanidinium, piperidinium, thiazolium, triazolium, oxazolium, pyrazolium, et leurs leurs mélanges.

Avantageusement, ledit au moins un sel organique comprend au moins un anion comprenant au moins une des molécules suivantes : les imides, notamment bis(trifluorométhanesulfonyl)imide; les borates, notamment tétrafluoroborate; les phosphates, notamment hexafluorophosphate; les phosphinates et les phosphonates, notamment les alkyl-phosphonates ; les amides, notamment dicyanamide; les aluminates, notamment tetrachloroaluminate ; les halogénures, tels que les anions bromure, chlorure, iodure; les cyanates ; les acétates, notamment trifluoroacétate ; les sulfonates, notamment méthanesulfonate, trifluorométhanesulfonate ; les sulfates, notamment hydrogène sulfate ; et leurs leurs mélanges.

Avantageusement, ledit procédé de synthèse comprend les étapes suivantes :
-I- Fabrication d'au moins un bloc polyamide PA;
-II- Polycondensation d'au moins un bloc mou BM de température de transition vitreuse Tg inférieure à 15°C, avec ledit au moins un bloc polyamide PA pour obtenir un copolymère à blocs ; et
-III- Récupération dudit alliage de copolymère à blocs.

De préférence, ledit au moins un sel organique a une température de fusion inférieure à la température de l'étape dudit procédé de synthèse au cours de laquelle il est ajouté. De préférence, ledit au moins un sel organique a une température de fusion inférieure à 300 °C, de préférence inférieure à 200°C, de préférence inférieure à 100°C et constitue avantageusement un liquide ionique, de préférence inférieure à 30°C.

De préférence, le sel organique est sous forme liquide à température et pression atmosphérique.

Avantageusement, ladite étape I comprend la polycondensation de précurseurs de polyamide en présence d'un régulateur de chaîne.

De préférence, ladite étape I comprend les sous-étapes suivantes :
- (I-1) chargement d'un réacteur avec un mélange comprenant au moins un précurseur de PA et au moins un régulateur de chaîne ;
- (1-2) phase de chauffe dudit mélange jusqu'à une température comprise dans la gamme allant de 180 à 350°C, de préférence de 200 à 300°C, de préférence de 230 à 290°C ;
- (1-3) phase isotherme chaude, pendant laquelle la température du mélange est maintenue constante, comprise dans la gamme allant de 180 à 350°C, de préférence de 200 à 300°C, de préférence de 230 à 290°C, pendant un temps suffisant pour amener le mélange introduit en I-1 à une viscosité suffisamment faible pour avoir un mélange homogène;
- (1-4) phase d'élimination d'eau, par détente (diminution de la pression) dudit mélange pendant laquelle le mélange retourne à pression atmosphérique et/ou par distillation.
- (1-5) balayage sous gaz inerte jusqu'à polymérisation complète du mélange sous forme de blocs polyamide.

Avantageusement, l'étape I comprend en outre une ou plusieurs des sous-étapes suivantes :
- (1-6) étape optionnelle de maintien sous pression réduite pour augmenter le rendement de la polymérisation si nécessaire, ladite pression étant de préférence inférieure à 500 mbar, de préférence inférieure à 100 mbar ;
- (I-7) étape optionnelle de récupération des blocs PA.

De préférence, ladite étape II comprend les sous-étapes suivantes :
(II-1) mise en présence, dans un réacteur, d'au moins une partie de la quantité d'au moins un bloc mou BM avec les blocs PA formés à l'étape I, et ajustement de la température du mélange de façon à homogénéiser le mélange, ladite température étant de préférence comprise dans la gamme allant de 180 à 350°C, de préférence de 200 à 300°C, de préférence de 200 à 260°C.

Avantageusement, l'étape II comprend en outre une ou plusieurs des sous-étapes suivantes :
- (II-2) étape optionnelle de mise sous balayage d'un gaz inerte et/ou sous pression faiblement réduite de façon à éliminer l'eau qui se forme dans le réacteur lors de la copolymérisation, ladite pression étant de préférence inférieure à 500 mbar, de préférence inférieure à 100 mbar;
- (II-3) étape optionnelle d'introduction de la partie restante dudit au moins un bloc BM le cas échéant.

De préférence, ladite étape III comprend les sous-étapes suivantes :
•(III-1) ajustement de la viscosité de l'alliage de copolymère obtenu jusqu'à atteindre la viscosité souhaitée pour l'alliage, le réacteur étant soumis à une pression inférieure à 100 mbar, de préférence inférieure à 50 mbar, de préférence inférieure à 10 mbar, plus préférablement inférieure à 1 mbar,
•(III-2) extrusion et récupération du copolymère à blocs.
(III-3) étape de d'étuvage des granulés pour réduire la teneur en humidité résiduelle en dessous de 0.1% en poids.

Selon un mode de réalisation, les étapes I et II sont réalisées successivement. Selon un deuxième mode de réalisation, les étapes I et II sont réalisées simultanément. Ce deuxième mode de réalisation est préféré.

Ledit au moins un sel organique est incorporé au cours de l'étape III.

Avantageusement, le procédé décrit précédemment comprend en outre l'addition d'agents améliorant la conductivité superficielle au cours de l'étape I, Il et/ou III, lesdits agents étant choisis parmi : des agents hygroscopiques ; des acides gras ; des lubrifiants ; des métaux ; des pellicules métalliques ; des poudres métalliques ; des nanopoudres métalliques ; des aluminosilicates ; des aminés, telles que des amines quaternaires ; des esters ; des fibres ; du noir de carbone ; des fibres de carbone ; des nanotubes de carbone ; du polyéthylène glycol ; des polymères intrinsèquement conducteurs, tels que des dérivés de polyaniline, de polythiophène, du polypyrrole ; des masterbatches ; et leurs mélanges.

Avantageusement, ledit procédé comprend en outre l'addition d'additifs et/ou d'adjuvants au cours de l'étape I, Il et/ou III, lesdits additifs et/ou d'adjuvants étant choisis parmi : les charges organiques ou inorganiques, les renforts, les plastifiants, les stabilisants, les anti-oxydants, anti-UV, les retardateurs de flamme, le noir de carbone, les nanotubes de carbone ; les colorants minéraux ou organiques, les pigments, les colorants, les agents de démoulage, lubrifiants, moussants, les agents anti-choc, agents anti-retrait, les agents ignifugeants, les agents nucléants, et leurs mélanges.

La présente invention a également pour objet un alliage de copolymère à blocs à propriétés antistatiques améliorées, comprenant au moins un bloc rigide polyamide et au moins un bloc mou,

Ledit alliage incorpore de 0.1 à 30%, de préférence de 0,1 à 5% en poids d'au moins un sel organique sur le poids total de l'alliage.

La proportion massique dudit au moins un bloc rigide polyamide représente de 5 à 95%, de préférence de 15 à 95% ; et la proportion massique dudit au moins un bloc souple représente de 5 à 95%, de préférence de 5 à 85%, sur la masse totale de copolymère.

Avantageusement, ledit au moins un bloc rigide et/ou ledit au moins un bloc mou sont issus au moins partiellement de matières premières renouvelables.

De préférence, ledit au moins un bloc rigide polyamide et/ou ledit au moins un bloc mou sont issu(s) en totalité de matières renouvelables.

Avantageusement, ledit alliage présente une teneur en bio-carbone d'au moins 1%, qui correspond à un ratio isotopique de ¹⁴C/¹²C d'au moins 1,2.10⁻¹⁴.

Avantageusement, la teneur en bio-carbone dudit alliage est supérieure à 5%, de préférence supérieure à 10%, de préférence supérieure à 25%, de préférence supérieure à 50%, de préférence supérieure à 75%, de préférence supérieure à 90%, de préférence supérieure à 95%, de préférence supérieure à 98%, de préférence supérieure à 99%, ou mieux sensiblement égale à 100%.

Avantageusement, ledit au moins un bloc polyamide comprend au moins une des molécules suivantes: du PA 12, du PA11, du PA10.10, du PA6, du PA6/12, un copolyamide comprenant au moins un des monomères suivants : 11, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T et leurs mélanges ou copolymères.

Avantageusement, ledit au moins un bloc mou est choisi parmi les blocs polyéther ; les blocs polyester ; les blocs polysiloxane, tels que les blocs polydiméthylsiloxane ; les blocs polyoléfine ; les blocs polycarbonate ; et leurs mélanges ou leur copolymères, statistiques ou à blocs.

Ledit Alliage de copolymère comprend au moins un bloc polyéther comprenant au moins 50% en poids de polyéthylène glycol PEG sur le poids total de bloc(s) polyéther(s).

La teneur totale en PEG est d'au moins 50% en poids, sur le poids total de l'alliage.

Avantageusement, ledit alliage comprend au moins un bloc rigide polyamide et au moins un bloc mou choisi parmi les blocs polyéther ; les blocs polyester ; les blocs polysiloxane, tels que les blocs polydiméthylsiloxane ; les blocs polyoléfine ; les blocs polycarbonate ; et leurs mélanges ; dans lequel la teneur totale en polyéthylène glycol PEG est d'au moins 35% en poids, sur le poids total de l'alliage, ledit alliage incorporant de 0,1 à 30% en poids d'au moins un sel organique sur le poids total de l'alliage.

La proportion massique dudit au moins un bloc rigide polyamide représente de 5 à 65%, et la proportion massique dudit au moins un bloc mou représente de 35 à 95%, de préférence de 35 à 85%, sur la masse totale du copolymère.

Avantageusement, ledit copolymère comprend un PEBA.

De préférence, ledit PEBA comprend du PA12-PEG, PA6-PEG, PA6/12-PEG, PA11-PEG, PA12-PTMG, PA6-PTMG, PA6/12-PTMG, PA11-PTMG, PA12-PEG/PPG, PA6-PEG/PPG, PA6/12-PEG/PPG, PA11-PEG/PPG, PA12 - PPG/PTMG, PA6 - PPG/PTMG, PA 6/12 - PPG/PTMG, et/ou PA11 - PPG/PTMG. Dans ces derniers exemples, polyéther1/polyéther2 représente un copolymère statistique ou à blocs.

Avantageusement, le copolymère est un copolymère segmenté à blocs comprenant trois types de blocs différents, ledit copolymère étant choisi parmi les copolyétheresteramides, les copolyétheramideuréthanes, dans le(s)quel(s) :
- le pourcentage massique en bloc rigide polyamide est supérieure à 10% ;
- le pourcentage massique en bloc souple est supérieur à 20% ;
sur la masse totale de copolymère.

La présente invention a également pour objet une composition comprenant un alliage de copolymère tel que défini précédemment, ledit alliage représentant en masse de 5 à 100%, de préférence de 5 à 70%, de préférence de 5 à 30%, sur la masse totale de la composition.

La présente invention a également pour objet l'utilisation d'un tel alliage de copolymère à blocs ou d'une telle composition, dans une matrice polymère thermoplastique pour améliorer les propriétés antistatiques de ladite matrice.

Avantageusement, ladite matrice polymère comprend au moins un polymère thermoplastique, homopolymère ou copolymère, choisi parmi : des polyoléfines, des polyamides, des polymères fluorés, des polyesters saturés, du polycarbonate, des résines styréniques, du PMMA, des polyuréthanes thermoplastiques (TPU), des copolymères de l'éthylène et de l'acétate de vinyle (EVA), des copolymères à blocs polyamide et blocs polyéther, des copolymères à blocs polyester et blocs polyéther, des copolymères à blocs polyamide, à blocs polyéther et à blocs polyester, des copolymères de l'éthylène et d'un (méth)acrylate d'alkyle, des copolymères de l'éthylène et de l'alcool vinylique (EVOH), de l'ABS, du SAN, de l'ASA, du polyacétal, des polycétones, et leurs mélanges. On peut citer notamment les résines PC / ABS et PC / ASA.

Avantageusement, la composition selon l'invention comporte de 1 à 40% en poids d'au moins un alliage de copolymère à blocs tel que défini précédemment et de 60 à 99% en poids d'une matrice polymère telle que définie précédemment, de préférence de 10 à 30% en poids d'au moins un copolymère à blocs selon l'invention et de 70 à 90% en poids d'une telle matrice polymère.

### Description détaillée de l'invention :

La présente description donc pour objet un procédé de synthèse d'un alliage à base de copolymère à blocs sur base polyamide (TPE-A), dans lequel au moins un sel organique est introduit au cours de ladite synthèse, de sorte que l'alliage de copolymère obtenu présente des propriétés antistatiques améliorées et des propriétés mécaniques identiques, comparées aux propriétés du même copolymère synthétisé sans sel organique.

Les sels organiques sont des sels constitués de cations organiques associés avec des anions inorganiques ou organiques.

Selon la présente invention, ledit au moins un sel organique est ajouté à au moins une partie du copolymère à blocs selon une teneur allant de 0,1 à 30% en poids sur le poids total d'alliage.

Selon la présente invention, ledit au moins un sel organique est ajouté à l'état fondu, c'est à dire lorsque le sel organique est à une température supérieure à sa température de fusion. Dans le procédé de l'invention, ledit au moins un sel organique a une température de fusion inférieure à la température de l'étape dudit procédé de synthèse au cours de laquelle il est ajouté.

De préférence, ledit au moins un sel organique a une température de fusion inférieure à 300 °C, de préférence inférieure à 200°C, de préférence inférieure à 100°C et constitue alors avantageusement un liquide ionique, de préférence inférieure à 30°C.

Les liquides ioniques en particulier ont pour principales propriétés d'être non volatils (pas de diffusion dans l'atmosphère de composés organiques volatils), ininflammables (donc faciles à manipuler et à stocker), stables à haute température (jusqu'à 400°C pour certains), très bons conducteurs, et très stables vis-à-vis de l'eau et de l'oxygène.

A titre d'exemples de cations organiques, on peut citer en particulier les cations : ammonium, sulfonium, pyridinium, pyrrolidinium, imidazolium, imidazolinium, phosphonium, lithium, guanidinium, piperidinium, thiazolium, triazolium, oxazolium, pyrazolium, et leurs leurs mélanges.

A titre d'exemple d'anions, on peut citer notamment les imides, notamment bis(trifluorométhanesulfonyl)imide (abrégé NTf2-) ; les borates, notamment tétrafluoroborate (abrégé BF4-) ; les phosphates, notamment hexafluorophosphate (abrégé PF6-) ; les phosphinates et les phosphonates, notamment les alkyl-phosphonates ; les amides, notamment dicyanamide (abrégé DCA-) ; les aluminates, notamment tetrachloroaluminate (AlCl4-), les halogénures (tels que les anions bromure, chlorure, iodure...), les cyanates, les acétates (CH3COO-), notamment trifluoroacétate ; les sulfonates, notamment méthanesulfonate (CH3SO3-), trifluorométhanesulfonate ; les sulfates, notamment hydrogène sulfate, etc.

Par sel organique au sens de l'invention, on entend plus particulièrement tout sel organique stable aux températures utilisées lors de la synthèse du copolymère à blocs selon le procédé de l'invention. L'homme du métier peut se reporter aux fiches techniques des sels organiques, qui indiquent la température limite de décomposition de chaque sel organique.

A titre d'exemples de sels organiques utilisables dans le procédé de synthèse selon l'invention, on peut citer notamment les sels organiques à base de cation ammonium, à base de cation imidazolium ou de cation imidazolinium, à base de cation pyridinium, à base de cation dihydropyridinium, à base de cation tétrahydropyridinium, à base de cation pyrrolidinium, à base de cation guanidine, à base de cation phosphonium.

Les sels organiques à base de cation ammonium associent par exemple:
- un cation N-trimethyl-N-propylammonium avec un anion bis(trifluoromethanesulfonyl)imide ;
- un cation N-trimethyl-N-butylammonium ou N-trimethyl-N-hexylammonium avec un anion choisi parmi le bromure, le tetrafluoroborate, l'hexafluorophosphate, le bis(trifluoromethanesulfonyl)imide ;
- un cation N-tributyl-N-methylammonium avec un anion iodure, bis(trifluoromethanesulfonyl)imide, ou dicyanamide ;
- un cation tetraethylammonium avec un anion tetrafluoroborate ;
- un cation (2-hydroxyéthyl)triméthylammonium avec un anion diméthylphosphate
- un cation di(2-hydroxyéthyl)ammonium avec un anion trifluoracétate ;
- un cation N,N-di(2-méthoxy)éthylammonium avec un anion sulfamate ;
- un cation N,N-diméthyl(2-hydroxyéthyl)ammonium avec un anion 2-hydroxyacétate ou trifluoroacétate ;
- un cation N-éthyl-N,N-diméthyle-2-méthoxyéthyle ammonium avec un anion bis(trifluorométhylsulfonyl)imide ;
- un cation éthyl-diméthyl-propylammonium et un anion bis(trifluorométhylsulfonyl)imide ;
- un cation méthyltrioctylammonium et una anion bis(trifluorméthylsulfonyl)imide ;
- un cation méthyltrioctylammonium et un anion trifluoroacétate ou trifluorométhylsulfonate ;
- un cation tétrabutylammonium et un anion bis(trifluorométhyl sulfonyl)imide ;
- un cation tétraméthylammonium et un anion bis(oxalato(2-))-borate ou tris(pentafluoroéthyl)trifluorophosphate ;

On peut également citer les sels organiques à base d'imidazole, tels que les imidazoles disubstitués, imidazoles monosubstitués, imidazoles trisubstitués ; en particulier ceux à base de cation imidazolium ou de cation imidazolinium.

On peut citer les sels organiques à base de cation imidazolium associant par exemple:
- un cation H-methylimidazolium avec un anion chlorure ;
- un cation 1-éthyl-3-methylimidazolium avec un anion chlorure, bromure, tetrafluoroborate, hexafluorophosphate, trifluoromethanesulfonate, bis(trifluoromethanesulfonyl)imide, tetrachloroaluminate, ethyl-phosphonate ou methyl-phosphonate, méthanesulfonate, ethyl-sulfate, ethyl-sulfonate ;
- un cation 1-butyl-3-methylimidazolium avec un anion chlorure, bromure, tetrafluoroborate, hexafluorophosphate, trifluoromethanesulfonate, bis(trifluoromethanesulfonyl)imide, tetrachloroaluminate, acétate, hydrogen sulfate, trifluoroacetate, méthanesulfonate ;
- un cation 1,3-dimethylimidazolium avec un anion methyl-phosphonate ;
- un cation 1-propyl-2,3-dimethylimidazolium avec un anion bis(trifluoromethanesulfonyl)imide ;
- un cation 1-butyl-2,3-dimethylimidazolium avec un anion tetrafluoroborate bis(trifluoromethanesulfonyl)imide ;
- un cation 1-hexyl-3-methylimidazolium avec un anion tetrafluoroborate, hexafluorophosphate, bis(trifluoromethanesulfonyl)imide ;
- un cation 1-octyl-3-methylimidazolium avec un anion bis(trifluoromethanesulfonyl)imide.
- un cation 1-ethanol-3-methylimidazolium avec un anion chlorure, bromure, tetrafluoroborate, hexafluorophosphate, bis(trifluoromethanesulfonyl)imide, dicyanamide ;

On peut également citer à titre d'exemples les sels organiques à base de cation pyridinium tels que: N-Butyl-3-méthylpyridinium bromure, N-Butyl-méthyle-4-pyridinium chlorure, N-Butyl-méthyle-4-pyridinium tétrafluoroborate, N-Butyl-3-méthylpyridinium chlorure, N-Butyl-3-méthylpyridinium dicyanamide, N-Butyl-3-méthylpyridinium méthylsulfate, 1-Butyl-3-méthylpyridinium tétrafluoroborate, N-Butylpyridinium chlorure, N-Butylpyridinium tétrafluoroborate, N-Butylpyridinium trifluorométhylsulfonate, 1-Ethyl-3-hydroxymethylpyridinium ethylsulfate, N-Hexylpyridinium bis(trifluorométhylsulfonyl)imide, N-Hexylpyridinium trifluorométhansulfonate, N-(3-Hydroxypropyl)pyridinium bis(trifluorométhylsulfonyl)imide, N-Butyl-3-méthylpyridinium trifluorométhanesulfonate, N-Butyl-3-methylpyridinium hexafluorophosphate.

On peut également citer à titre d'exemples les sels organiques à base d'un cation pyrrolidinium tels que : Butyl-1-méthyle-1-pyrrolidinium chlorure, Butyl-1-méthylepyrrolidinium dicyanamide, Butyl-1-méthyle-1-pyrrolidinium trifluorométhanesulfonate, Butyl-1-méthyle-1-pyrrolidinium tris(pentafluoroéthyl), 1-Butyl-1-méthylpyrrolidinium bis[oxalato(2-)]borate, 1-Butyl-1-méthylpyrrolidinium bis(trifluorométhylsulfonyl)imide, 1-Butyl-1-méthylpyrrolidinium dicyanamide, 1-Butyl-1-méthylpyrrolidinium trifluoroacétate, 1-Butyl-1-méthylpyrrolidinium trifluorométhanesulfonate, Butyl-1-méthyl-1-pyrrolidinium tris(pentafluoroéthyl)trifluorophosphate, 1,1-Diméthylpyrrolidinium iodure, 1-(2-Ethoxyéthyl)-1-méthylpyrrolidinium bis(trifluorométhylsulfonyl)imide, 1-Hexyl-1-méthylpyrrolidinium bis(trifluorométhylsulfonyl)imide, 1-(2-méthoxyéthyle)-1-méthyl pyrrolidinium bis(trifluorométhylsulfonyl)imide, Méthyle-1-octyl-1-pyrrolidinium chlorure, 1-Butyl-1-méthylpyrrolidinium bromure.

On peut citer en outre les sels organiques associant :
- un cation 1-ethyl-1-methylpyrrolidinium avec un anion bromure, tetrafluoroborate, hexafluorophosphate, trifluoromethanesulfonate;
- un cation 1-butyl-1-methylpyrrolidinium avec un anion chlorure, bromure, tetrafluoroborate, hexafluorophosphate, trifluoromethanesulfonate, bis(trifluoromethanesulfonyl)imide, dicyanamide, acetate ou hydrogen sulfate ;
- un cation N-propyl-N-methylpyrrolidinium avec un anion bis(trifluoromethanesulfonyl)imide ;
- un cation 1-methyl-1-propylpiperidinium avec un anion bis(trifluoromethanesulfonyl)imide ;

On peut également citer, à titre d'exemples, les sels organiques à base d'un cation guanidine, tels que : guanidine trifluorométhylsulfonate, guanidine tris(pentafluoroéthyl)trifluoro phosphate, hexaméthylguanidine tris(pentafluoroéthyl)trifluorophosphate.

On peut citer les sels organiques à base d'un cation phosphonium tels que trihexyl(tétradecyl)phosphonium bis[oxalat(2-)]borate ; trihexyl(tétradécyl)phosphonium bis(trifluorométhylsulfonyl) imide ; trihexyl(tétradécyl)phosphonium tris(pentafluoroéthyl)trifluorophosphate.

La liste de sels organiques et de cations et anions précités pouvant entrer dans la composition des sels organiques utilisables selon l'invention, est donnée uniquement à titre d'exemples, elle n'est pas exhaustive ni limitative. Par conséquent l'addition de tout autre sel organique est bien entendu envisageable dans le procédé de l'invention, dès l'instant que la température de décomposition du sel organique est supérieure aux températures des étapes du procédé de l'invention au cours desquelles le sel organique est présent.

Un élastomère thermoplastique sur base polyamide (TPE-A) au sens de l'invention, tel qu'un PEBA, est un copolymère à blocs comprenant un enchaînement de blocs, alternativement durs (BD) et mous (BM), selon la formule générale suivante :

-[BD-BM]n-

et dans laquelle :
▪ BD ou Bloc Dur représente un bloc comprenant du polyamide (homopolyamide ou copolyamide) ou un mélange de blocs comprenant du polyamide (homopolyamide ou copolyamide), ci-après abrégé indépendamment bloc PA ou BD ;
▪ BM ou Bloc Mou représente un bloc à base de polyéther (bloc PE), de polyester (bloc PES), de polydiméthylsiloxane (bloc PDMS), de polyoléfine (bloc PO), de polycarbonate (bloc PC) et/ou de tout autre polymère de faible température de transition vitreuse, ou de leurs mélanges sous forme de copolymères alternés, statistiques ou à blocs. De préférence, BM est un bloc à base de polyéther comportant des motifs oxyde d'éthylène, en tout ou partie.
▪ n représente le nombre d'unités de répétition du motif -BD-BM- dudit copolymère. n est compris dans la gamme allant de 1 à 60, de préférence de 5 à 30, ou mieux de 6 à 20.

Par faible température de transition vitreuse pour un polymère entrant dans la composition d'un BM au sens de l'invention, on entend une température de transition vitreuse Tg inférieure à 15°C, de préférence inférieure à 0°C, de préférence inférieure à -15°C, de préférence encore inférieure à -30°C. A titre d'exemple, ledit bloc mou peut être à base de PEG de masse molaire en nombre égale à 1500g/mol et de Tg de l'ordre de -35°C. Ladite température de transition vitreuse Tg peut également être inférieure à -50°C, notamment dans le cas où ledit bloc mou est à base de PTMG.

Le procédé de synthèse d'un alliage à base de copolymère à blocs selon l'invention utilise tout moyen permettant d'accrocher lesdits blocs durs avec lesdits blocs mous. Plusieurs moyens peuvent être envisagés: en solution, en masse ou via une technique inter-faciale, voire en combinant plusieurs de ces méthodes, comme décrit dans le chapitre 9 du Handbook of Condensation Thermoplastic Elastomers (Edited by Stoyko Fakirox, Wiley-VCH, Weinheim, 2005).

Les TPE-A, tels que les PEBA, résultent généralement de la polycondensation en masse de blocs durs (BD) à extrémités réactives avec des blocs mous (BM) à extrémités réactives complémentaires, telles que:
▪ BD à bouts de chaîne amine avec BM à bouts de chaîne acide carboxylique ou isocyanate,
▪ BD à bouts de chaîne acide carboxylique avec BM à bout de chaîne amine, alcool ou isocyanate.

Les PEBA par exemple, résultent de la polycondensation de blocs BD polyamide à bouts de chaîne acide carboxylique avec des blocs BM polyether à bouts de chaîne alcool ou amine.

En pratique, le procédé d'accrochage des BD avec les BM se fait soit en deux étapes principales, soit en une seule étape principale.

Que ce soit en une ou deux étapes il est avantageux d'opérer en présence d'un catalyseur. Par catalyseur, on entend tout produit permettant de faciliter la liaison des blocs polyamide et des blocs mous, notamment par estérification ou par amidification. Le catalyseur d'estérification est avantageusement un dérivé d'un métal choisi dans le groupe formé par le titane, le zirconium et l'hafnium ou encore un acide fort tel que l'acide phosphorique ou l'acide borique. On peut utiliser les catalyseurs décrits dans les brevets US 4 331 786, US 4 115 475, US 4 195 015, US 4 839 441, US 4 864 014, US 4 230 838 et US 4 332 920, WO 04 037898, EP 1262527, EP 1270211, EP 1136512, EP 1046675, EP 1057870, EP 1155065, EP 506495 et EP 504058.

Selon un premier mode de réalisation, le procédé de l'invention comprend deux étapes principales. Dans une première étape (I), on prépare au moins un bloc PA, et dans une deuxième étape (II), on fait réagir ledit au moins un bloc PA avec au moins un bloc BM, de préférence en présence d'un catalyseur et sous pression réduite.

Ladite étape (I) peut comprendre tout moyen connu de l'homme de l'art pour fabriquer des blocs polyamide, par exemple par réaction de polycondensation entre des précurseurs de polyamide et un diacide carboxylique ou une diamine comme régulateur de chaîne. Dans ce cas, l'étape I se divise en plusieurs sous-étapes :
▪ (I-1) charger un réacteur (par exemple un autoclave) avec un mélange comprenant au moins un précurseur de PA et au moins un régulateur de chaîne, tel qu'une diamine ou un diacide.

Ledit régulateur de chaîne est de préférence choisi parmi l'acide adipique, l'acide sébacique, l'acide téréphthalique, l'acide isophthalique, et leurs mélanges;
(I-2) phase de chauffe dudit mélange jusqu'à une température comprise dans la gamme allant de 180 à 350°C, de préférence de 200 à 300°C, de préférence de 230 à 290°C ;

De l'eau peut éventuellement être ajoutée au mélange pour améliorer la conduction thermique et/ou pour atteindre une pression suffisante, notamment pour ouvrir les cycles, de lactame 12 par exemple.
(I-3) phase isotherme chaude, pendant laquelle la température du mélange est maintenue constante, comprise dans la gamme allant de de 180 à 350°C, de préférence de 200 à 300°C, de préférence de 230 à 290°C, pendant un temps suffisant pour amener toutes les matières introduites en I-1 à un état fluide, c'est-à-dire de viscosité suffisamment faible pour avoir un mélange homogène;

Le temps de la phase isotherme chaude est généralement compris dans la gamme allant de 15 minutes à 5 heures, de préférence de 30 minutes à 4 heures, de préférence de 30 minutes à 3 heures.

Pendant cette phase isotherme chaude, la pression dans le réacteur s'établit par exemple entre 1 et 40 bar. De préférence la pression ne dépasse pas 30 bar, mais cette pression maximale dépend en fait du réacteur et de la façon dont il a été construit.
(I-4) phase d'élimination d'eau, par détente (diminution de la pression) dudit mélange pendant laquelle le mélange retourne à pression atmosphérique et/ou par distillation. Il s'agit d'eau éventuellement ajoutée pendant la phase I-1, I-2, et/ou 1-3 ou d'eau formée au cours de ces phases; puis
(I-5) balayage sous gaz inerte jusqu'à polymérisation complète du mélange sous forme de blocs polyamide.

Le temps de balayage peut être compris dans la gamme allant de quelques minutes à quelques heures, de préférence de 5 minutes à 5 heures, de préférence de 30 minutes à 3 heures, de préférence de 1 heure à 2 heures.

L'étape I peut en outre comprendre une ou plusieurs des sous-étapes suivantes :
(I-6) étape optionnelle de maintien sous pression réduite, par exemple inférieure à 500 mbar, de préférence inférieure à 100 mbar, pour augmenter le rendement de la polymérisation si nécessaire.
▪ (I-7) étape optionnelle de récupération des blocs durs BD, c'est-à-dire des blocs PA.

Toutes les matières premières nécessaires à la constitution du bloc BD peuvent être chargées dans le réacteur au départ dans l'ordre que l'homme de l'art juge adéquat, comme c'est le cas par exemple lors de l'étape I-1 du procédé décrit ci-dessus à titre d'exemple, mais on peut bien entendu envisager l'introduction d'une ou de plusieurs matière(s) première(s) lors de n'importe quelle sous-étape I-1 à I-7.

La température pour cette étape principale I est comprise dans la gamme allant de 180 à 350 °C, de préférence de 200 à 300°C, ou mieux de 230 à 290°C.

Ledit au moins un bloc dur BD (bloc PA) peut être extrudé pour une utilisation ultérieure, conservé dans le réacteur ou transféré dans un autre réacteur, pour réaliser l'étape II décrite ci-après.

L'étape (II) comprend la(les) sous-étape(s) suivante(s) :
(II-1) mise en présence, dans un réacteur, d'au moins une partie de la quantité d'au moins un bloc mou BM avec les blocs PA formés à l'étape I, et ajustement de la température du mélange obtenu si nécessaire, de sorte que sa température est comprise dans la gamme allant de 180 à 350°C, de préférence de 200 à 300°C, de préférence de 200 à 260°C ;
(II-2) étape optionnelle de mise sous balayage d'azote (ou d'un autre gaz inerte) et/ou sous pression faiblement réduite, par exemple inférieure à 500 mbar, de préférence inférieure à 100 mbar, de façon à éliminer l'eau qui se forme dans le réacteur lors de la copolymérisation ;
(II-3) étape optionnelle d'introduction de la partie restante dudit au moins un bloc BM le cas échéant.

La température et la durée de chaque étape peuvent être aisément ajustées par l'homme du métier pour optimiser la réactivité de polycondensation tout en minimisant les réactions secondaires. La température pour cette étape principale II est également comprise dans la gamme allant de 180 à 350°C, de préférence de 200 à 300°C, ou mieux de 200 à 260°C.

Selon un deuxième mode de réalisation, le procédé selon l'invention comprend une seule étape principale caractérisée par le fait que ledit au moins un bloc mou est introduit directement pendant l'étape principale I, de la même façon que les matières premières nécessaires à la constitution du bloc PA, c'est-à-dire lors de n'importe quelle étape intermédiaire I-1 à I-7. Dans ce mode de réalisation, les étapes principales I et II sont en fait réalisées simultanément, d'où un gain de temps, alors que dans le mode de réalisation en deux étapes principales les étapes I et II sont réalisées successivement.

Quel que soit son mode de réalisation (en une étape ou en deux étapes), le procédé de l'invention comprend une étape finale III de finalisation et de récupération d'un alliage de copolymère à blocs. Cette étape III comprend au moins deux sous-étapes :
▪ (III-1) ajustement de la viscosité de l'alliage de copolymère obtenu: le réacteur est mis sous pression réduite, sous vide poussé, jusqu'à atteindre la viscosité souhaitée, c'est-à-dire la masse molaire souhaitée pour le copolymère. Par « masse molaire souhaitée », on entend une gamme de masse molaire en nombre allant de 10000 à 100000 g/mol, de préférence allant de 15000 à 50000 g/mol, de préférence allant de 20000 g/mol à 40000 g/mol. La pression au cours de cette sous-étape est de préférence inférieure à 100 mbar, de préférence inférieure à 50 mbar, de préférence inférieure à 10 mbar, plus préférablement inférieure à 1 mbar.

L'augmentation de masse molaire du copolymère, et donc de la viscosité du milieu, est par exemple déterminée en mesurant l'évolution de la valeur du couple de torsion exercé par le polymère fondu sur l'agitateur ou bien par la mesure de la puissance électrique consommée par l'agitateur, pour une vitesse d'agitation donnée.
(III-2) extrusion et récupération dudit alliage de copolymère à blocs, par exemple sous forme de granulés ou de toute autre forme.
(III-3) étape d'étuvage des granulés pour réduire la teneur en humidité résiduelle en dessous de 0.1% en poids.

La vitesse d'agitation de chaque étape est optimisée en fonction de la rhéologie du milieu et de la nature de l'agitateur.

La mise sous pression réduite peut se faire progressivement ou par paliers successifs. Le niveau de pression sous vide maximal dépend de la nature des espèces en présence, de leur nature hydrophile ou hydrophobe et de leur réactivité. Un catalyseur peut être ajouté lors d'une des étapes I et/ou II, de préférence lors d'une des sous-étapes II, pour un catalyseur sensible à l'hydrolyse.

Selon le procédé de synthèse de l'invention, quels que soient le nombre d'étapes principales et le mode d'accrochage des BD avec les BM, au moins un sel organique est ajouté lors de l'étape III. La quantité dudit au moins un sel organique ajouté représente de 0,1 à 30% en poids sur le poids total d'alliage. Le choix de l'étape d'ajout est fonction de la sensibilité du sel organique à l'hydrolyse et à la température. En effet, un sel organique sensible à l'hydrolyse ou à la température sera ajouté de préférence pendant une étape de balayage sous azote pour minimiser son temps de séjour à haute température et/ou pour minimiser le temps du sel organique passé en présence d'une quantité importante d'eau.

Le sel organique est ajouté au cours de l'étape III, pendant l'étape III-3 d'étuvage.

Ladite imprégnation est réalisée pendant l'étape d'étuvage (III-3). Par exemple, les granulés sont mis en contact avec le sel organique directement dans un séchoir, et agités pendant 8 heures à 60°C sous vide.

L'imprégnation des granulés de TPE-A peut être faite au début ou pendant le séchage mais elle nécessite au moins quelques heures de contact. Le liquide d'imprégnation est ajouté en le versant directement sur les granulés ou par un système de goutte à goutte, ou encore par un système de pulvérisation tel qu'un spray. L'ajout de sel organique par imprégnation peut être réalisé à une température allant de la température ambiante à la température de séchage ou d'étuvage de l'étape III-3 (par exemple à 60°C).

Des adjuvants et/ou des additifs peuvent en outre être ajoutés dans l'alliage, selon le procédé de synthèse de l'invention, notamment avant l'étape (II-1), et/ou lors de toute autre étape du procédé (I, II, et/ou III). De même que pour l'ajout de sel organique, l'étape la plus appropriée pour l'ajout de ces adjuvants et/ou additifs est choisie en fonction de la sensibilité de l'additif et/ou de l'adjuvant à la dégradation ou à toute autre réaction pouvant modifier sa structure et son efficacité.

A titre d'exemples d'additifs, on peut citer les charges organiques ou inorganiques, les renforts, les plastifiants, les stabilisants, les anti-oxydants, anti-UV, les retardateurs de flamme, le noir de carbone, etc.

A titre d'exemples d'adjuvants, on peut citer les colorants minéraux ou organiques, les pigments, les colorants, les agents de démoulage, lubrifiants, moussants, les agents anti-choc, agents anti-retrait, les agents ignifugeants, les agents nucléants.

Des agents antistatiques autres que les sels organiques, peuvent en outre être ajoutés au cours du procédé de l'invention, tels que des sels inorganiques, des agents hygroscopiques ; des acides gras ; des lubrifiants ; des métaux ; des pellicules métalliques ; des poudres métalliques ; des nanopoudres métalliques ; des aluminosilicates ; des amines, telles que des amines quaternaires ; des esters ; des fibres ; du noir de carbone ; des fibres de carbone ; des nanotubes de carbone ; du polyéthylène glycol ; des polymères intrinsèquement conducteurs, tels que des dérivés de polyaniline, de polythiophène, du polypyrrole ; des masterbatches ; et leurs mélanges ; et/ou tout autre agent permettant d'augmenter l'écoulement des charges en augmentant la conductivité superficielle de l'alliage de polymère.

La présente invention a également pour objet un alliage élastomère thermoplastique TPE-A, c'est-à-dire un alliage de copolymère à blocs comprenant au moins un bloc rigide polyamide (homopolyamide ou copolyamide) et au moins un bloc souple, obtenu par le procédé de synthèse décrit précédemment et ayant des propriétés antistatiques améliorées, grâce à l'incorporation d'au moins un sel organique au cours dudit procédé de synthèse. Un tel alliage TPE-A comprend par exemple un copolymère à blocs polyéther et à blocs polyamide (PEBA),

L'alliage de copolymère à blocs à propriétés antistatiques améliorées de l'invention incorpore de 0,1 à 30% en poids d'au moins un sel organique sur le poids total de copolymère. Il incorpore de préférence de 0.1 à 20%, de préférence de 0,1 à 5% en poids d'au moins un sel organique sur le poids total de copolymère.

Dans l'alliage de copolymère selon l'invention:
- la proportion massique dudit au moins un bloc rigide polyamide représente de 5 à 95%, de préférence de 15 à 95%,
- la proportion massique dudit au moins un bloc souple représente de 5 à 95%, de préférence de 5 à 85%,
sur la masse totale de copolymère.

Par blocs rigides ou durs dans les alliages TPE-A selon l'invention, on entend des blocs polyamide, pouvant comporter des homopolyamides ou des copolyamides.

De préférence, la masse molaire en nombre Mn des blocs polyamide est comprise dans la gamme allant de 400 à 20000 g/mol, de préférence de 500 à 10000 g/mol, et de préférence encore de 600 et 3000 g/mol.

Dans les alliages de copolymères à blocs selon l'invention, les blocs PA peuvent être à extrémités acide carboxylique, on parle alors de PA diacide ou alors ils peuvent être à extrémité amine, on parle de PA diamine.

Les liaisons entre les blocs PA et les blocs mous (BM) peuvent donc être des liaisons ester ou bien des liaisons amide.

Les blocs polyamides à bouts de chaînes dicarboxyliques proviennent, par exemple, de la condensation de précurseurs de polyamides en présence d'un diacide carboxylique limiteur de chaîne.

Les blocs polyamides à bouts de chaînes diamines proviennent par exemple de la condensation de précurseurs de polyamides en présence d'une diamine limiteur de chaîne.

Trois types de polyamides peuvent entrer dans la composition de ces blocs PA.

Selon un premier type, les blocs polyamide proviennent de la condensation d'au moins un diacide carboxylique (aliphatique, cycloaliphatique ou aromatique), en particulier ceux ayant de 4 à 36 atomes de carbone, de préférence ceux ayant de 6 à 18 atomes de carbone, et d'au moins une diamine (aliphatique, cycloaliphatique ou aromatique) choisie en particulier parmi celles ayant de 2 à 36 atomes de carbone, de préférence celles ayant de 6 à 12 atomes de carbone.

A titre d'exemples de diacides aliphatiques, on peut citer les acides butanedioïque, adipique, subérique, azélaïque, sébacique, dodécanedicarboxylique, myristique, tétradécanedicarboxylique, hexadécanedicarboxylique, octadécanedicarboxylique et les acides gras dimérisés.

A titre d'exemples de diacides cycloaliphatiques, on peut citer l'acide 1,4-cyclohexyldicarboxylique.

A titre d'exemples de diacides aromatiques, on peut citer les acides téréphtalique (T),isophtalique (I) et le sel de sodium, potassium ou lithium de l'acide 5-sulfo isophtalique.

A titre d'exemples de diamines aliphatiques, on peut citer la tétraméthylène diamine, l'hexaméthylènediamine, la 1,10-décaméthylènediamine, la dodécaméthylènediamine, la triméthylhexaméthylène diamine.

A titre d'exemple de diamines cycloaliphatiques, on peut citer les isomères des bis-(4-aminocyclohexyl)-méthane (BACM ou PACM), bis-(3-méthyl-4-aminocyclohexyl)méthane (BMACM ou MACM), et 2-2-bis-(3-méthyl-4-aminocyclohexyl)-propane (BMACP), l'isophoronediamine (IPDA), la 2,6-bis-(aminométhyl)-norbornane (BAMN) et la pipérazine (Pip).

Avantageusement, le copolymère selon l'invention comprend au moins un bloc PA à base de PA 4.4, PA 4.6, PA 4.9, PA 4.10, PA 4.12, PA 4.13, PA 4.14, PA 4.16, PA 4.18, PA 4.36, PA 6.4, PA 6.6, PA 6.9, PA 6.10, PA 6.12, PA 6.13, PA 6.14, PA 6.16, PA 6.18, PA 6.36, PA 9.4, PA 9.6, PA 9.10, PA 9.12, PA 9.13, PA 9.14, PA 9.16, PA 9.18, PA 9.36, PA 10.4, PA 10.6, PA 10.9, PA 10.10, PA 10.12, PA 10.13, PA 10.14, PA 10.16, PA 10.18, PA 10.36, PA 10.T, PA 10.I, PA BMACM.4, PA BMACM.6, PA BMACM.9, PA BMACM.10, PA BMACM.12, PA BMACM.13, PA BMACM.14, PA BMACM.16, PA BMACM.18, PA BMACM.36, PA PACM.4, PA PACM.6, PA PACM.9, PA PACM.10, PA PACM.12, PA PACM.13, PA PACM.14, PA PACM.16, PA PACM.18, PA PACM.36, PA Pip.4, PA Pip.6, PA Pip.9, PA Pip.10, PA Pip.12, PA Pip.13, PA Pip.14, PA Pip.16, PA Pip.18 et/ou PA Pip.36, et leurs copolymères.

Selon un deuxième type, les blocs polyamides résultent de la condensation d'un ou de plusieurs acides alpha oméga aminocarboxyliques et/ou d'un ou plusieurs lactames ayant de 6 à 12 atomes de carbone en présence d'un diacide carboxylique ayant de 4 à 36 atomes de carbone ou d'une diamine.

A titre d'exemples de lactames, on peut citer le caprolactame, l'oenantholactame et le lauryllactame.

A titre d'exemples d'acide alpha omega amino carboxylique, on peut citer les acides aminocaproïque, amino-7-heptanoïque, amino-11-undécanoïque et amino-12-dodécanoïque.

Avantageusement, les blocs polyamides du deuxième type sont en polyamide 11, en polyamide 12 ou en polyamide 6.

Selon un troisième type, les blocs polyamide résultent de la condensation d'au moins un monomère du premier type avec au moins un monomère du deuxième type. En d'autres termes, les blocs polyamides résultent de la condensation d'au moins un acide alpha oméga aminocarboxylique (ou un lactame), avec au moins une diamine et un diacide carboxylique.

Dans ce cas, on prépare les blocs PA par polycondensation :
- de la ou des diamines aliphatiques, cycloaliphatiques ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone ;
- en présence d'un limiteur de chaîne choisi parmi les diacides carboxyliques ou diamines ou d'un excès de diacide ou de diamine utilisé comme unité structurale; Avantageusement, on utilise comme limiteur de chaîne le diacide carboxylique ayant Y atomes de carbone, que l'on introduit en excès par rapport à la stœchiométrie de la ou des diamines.

Selon une autre variante de copolyamides, les blocs polyamides résultent de la condensation d'au moins deux acides alpha oméga aminocarboxyliques différents ou d'au moins deux lactames différents ayant de 6 à 12 atomes de carbone ou d'un lactame et d'un acide aminocarboxylique n'ayant pas le même nombre d'atomes de carbone en présence éventuelle d'un limiteur de chaîne.

A titre d'exemples de blocs polyamides, on peut citer ceux formés par les polyamides (copolyamides) suivants:
PA 6/12 dans laquelle 6 désigne du caprolactame et 12 désigne du lauryllactame.
PA 11/12 dans laquelle 11 désigne l'acide amino-11-undécanoïque, et 12 désigne du lauryllactame.
▪ PA 6/11 dans laquelle 6 désigne du caprolactame et 11 désigne l'acide amino-11-undécanoïque.
▪ PA 6/6.6 dans lequel 6 désigne du caprolactame et 6.6 désigne un monomère résultant de la condensation de l'hexaméthylènediamine avec de l'acide adipique.

A titre d'exemples, on peut encore citer le PA 10.10/11, PA 6.10/11, PA10.12/11, PA 10.10/11/12, PA 6.10/10.10/11, PA 6.10/6.12/11, PA 6.10/6.12/10.10, PA 11/6.36, PA 11/10.36, PA 10.10/10.36

L'élastomère thermoplastique (TPE-A) selon l'invention comprend en outre au moins un bloc souple, c'est à dire présentant une faible température de transition vitreuse (Tg). Par faible température de transition vitreuse, on entend une température de transition vitreuse Tg inférieure à 15 °C, de préférence inférieure à 0°C, avantageusement inférieure à -15°C, encore plus avantageusement à -30°C, éventuellement inférieure à -50°C.

De préférence, la masse molaire en nombre Mn des blocs souples selon l'invention est comprise dans la gamme allant de 250 à 5000 g/mol, de préférence de 250 à 3000 g/mol, et de préférence encore de 500 et 2000 g/mol.

Par blocs souples ou mous envisageables dans les TPE-A selon l'invention, on entend notamment ceux choisis parmi les blocs polyéther, les blocs polyester, les blocs polysiloxane, tels que les blocs polydiméthylsiloxane ou PDMS, les blocs polyoléfine, les blocs polycarbonate, et leurs mélanges.

Par blocs polyéther (ci-après abrégé PE) au sens de l'invention on entend les polyoxyalkylènes, tels que les polyalkylènes éthers polyols, notamment des polyalkylènes éther diols. Les blocs PE du copolymère de l'invention comprennent au moins une molécule choisie parmi le poly(éthylène glycol) (PEG), le poly(1,2-propylène glycol) (PPG), le polytétraméthylène glycol (PTMG), le polyhexaméthylène glycol, le poly(1,3-propylène glycol) (PO3G), les poly(3-alkyl tétrahydrofurane) en particulier le poly(3-méthyltétrahydrofurane (poly(3MeTHF)), et leurs mélanges. On peut également envisager un bloc PE de type «copolyéther» alterné, statistique ou à blocs, contenant un enchaînement d'au moins deux types de PE cités ci-dessus.

Les blocs polyéther peuvent également comprendre des blocs obtenus par oxyéthylation de bisphenols, tels que par exemple le bisphenol-A. Ces derniers produits sont décrits dans le brevet EP 613 919.

Les blocs polyéthers peuvent aussi comprendre des amines primaires éthoxylées. A titre d'exemple d'amines primaires éthoxylées on peut citer les produits de formule : 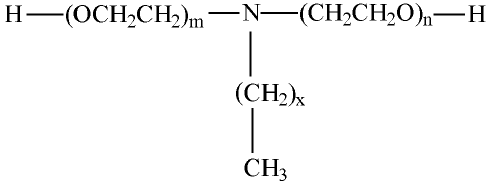 dans laquelle m et n sont compris entre 1 et 20 et x entre 8 et 18. Ces produits sont disponibles dans le commerce sous la marque NORAMOX® de la société CECA et sous la marque GENAMIN® de la société CLARIANT.

Ainsi, les fins de chaînes des blocs PE peuvent être diOH, diNH2, diisocyanate ou diacide suivant leur procédé de synthèse.

Les blocs PE à bouts de chaîne NH2, peuvent être obtenus par cyanoacétylation de séquences polyoxyalkylène alpha-oméga dihydroxylées aliphatiques appelées polétherdiols telles que les Jeffamines® D300, D400, D2000, ED-600, ED-900, ED2003, les Elastamines® RP-409, RP-2009, RT-1000, RE-600, RE-900, RE-2000, HT-1700, HE-180 de la société Huntsman. De tels blocs sont décrits dans les brevets JP 2004346274, JP 2004352794 et EP1482011.

Avantageusement, le bloc BM dans le copolymère à blocs de l'alliage selon l'invention est un bloc contenant des motifs éthylène glycol. De préférence, le bloc BM est un bloc PEG ou un bloc obtenu par éthoxylation d'un bisphenol (par exemple bisphenol A).

On peut aussi envisager un bloc polyéther qui est un copolymère dont le monomère majoritaire est l'oxyde d'éthylène. Dans ce cas, l'oxyde d'éthylène représente plus de 50% en poids sur le poids total de copolymère.

La teneur totale en PEG dans l'alliage de copolymère à blocs selon l'invention est de préférence supérieure à 35% en poids, de préférence supérieure ou égale à 50% en poids. Il peut bien entendu comporter d'autres blocs polyéthers ou d'autres blocs souples (par exemple polyester).

De manière surprenante, on obtient également un effet antistatique amélioré par ajout de sel organique lors de la synthèse d'un alliage de copolymère comprenant des blocs majoritairement formés de PTMG, lesdits blocs ayant une faible reprise en eau. Contrairement au préjugé largement répandu dans les utilisations antistatiques, la présence de blocs PEG (hydrophiles), si elle est préférée, n'est donc pas obligatoire dans le procédé de synthèse selon l'invention pour voir apparaître un effet antistatique amélioré sur l'alliage de copolymére selon l'invention. Avantageusement, l'alliage de copolymère à blocs de la présente invention comprend un polyéther bloc amide, abrégé PEBA.

Les PEBA résultent de la polycondensation de blocs polyamides à extrémités réactives avec des blocs polyéthers à extrémités réactives, telles que, entre autres :
1) blocs polyamides à bouts de chaîne diamines avec des blocs polyoxyalkylènes à bouts de chaînes dicarboxyliques.
2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols
3) blocs polyamides à bouts de chaînes dicarboxyliques avec des polyétherdiols, les produits obtenus étant, dans ce cas particulier, des polyétheresteramides.

Avantageusement, le PEBA selon l'invention comprend du PA12-PEG, PA6-PEG, PA6/12-PEG, PA11-PEG, PA12-PTMG, PA6-PTMG, PA6/12-PTMG, PA11-PTMG, PA12-PEG/PPG, PA6-PEG/PPG, PA6/12-PEG/PPG, et/ou PA11-PEG/PPG.

Par blocs polyester (ci-après abrégé PES) au sens de l'invention, on entend les polyesters habituellement fabriqués par polycondensation entre un acide dicarboxylique et un diol. Les acides carboxyliques appropriés comprennent ceux mentionnés ci-dessus utilisés pour former les blocs polyamide à l'exception des acides aromatiques, comme l'acide téréphtaliques et isophtaliques. Les diols appropriés comprennent les diols aliphatiques linéaires tels que l'éthylène glycol, le 1,3-propylène glycol, le 1,4-butylène glycol, le 1,6-hexylène glycol, les diols branchés tel que le néopentylglycol, le 3-méthylpentane glycol, le 1,2-propylène glycol, et les diols cycliques tels que le 1,4-bis(hydroxyméthyl)cyclohexane et le 1,4-cyclohexane-diméthanol.

On entend également par polyesters, le poly(caprolactone) et les PES à base de dimères d'acide gras, en particulier les produits de la gamme PRIPLAST® de la société Uniqema.

On peut également envisager un bloc PES de type «copolyester» alterné, statistique ou à blocs, contenant un enchaînement d'au moins deux types de PES cités ci-dessus.

Par bloc polysiloxane (ci-après abrégé PSi) au sens de l'invention, on entend tout polymère ou oligomère organisilicié à structure linéaire ou cyclique, ramifiée ou réticulée obtenu par polymérisation de silanes fonctionnalisés et constitué pour l'essentiel par une répétition de motifs principaux dans lesquels des atomes de silicium sont reliés entre eux par des atomes d'oxygène (liaison siloxane Si-O-Si), des radicaux hydrocarbonés éventuellement substitués étant directement liés par l'intermédiaire d'un atome de carbone sur lesdits atomes de silicium. Les radicaux hydrocarbonés les plus courants sont les radicaux alkyls notamment en C1-C10 et en particulier méthyle, les radicaux fluoroalkyls, les radicaux aryls et en particulier phényle, et les radicaux alcényls et en particulier vinyle ; d'autres types de radicaux susceptibles d'être lies soit directement, soit par l'intermediaire d'un radical hydrocarboné, à la chaîne siloxanique sont notamment l'hydrogène, les halogènes et en particulier le chlore, le brome ou le fluor, les thiols, les radicaux alcoxy, les radicaux polyoxyalkylènes (ou polyéthers) et en particulier polyoxyéthylène et/ou polyoxypropylène, les radicaux hydroxyls ou hydroxyalkyls, les groupements amines substitués ou non, les groupements amides, les radicaux acyloxy ou acyloxyalkyls, les radicaux hydroxyalkylamino ou aminoalkyls, des groupements ammonium quaternaires, des groupements amphotères ou betaïniques, des groupements anioniques tels que carboxylates, thioglycolates, sulfosuccinates, thiosulfates, phosphates et sulfates, et leurs mélanges, cette liste n'étant bien entendu nullement limitative (silicones dites "organomodifiees").

De préférence, lesdits blocs polysiloxane comprennent du polydiméthylsiloxane (ci-après abrégé blocs PDMS), du polyméthylphénylsiloxane, et/ou du polyvinylsiloxane.

Par bloc polyoléfine (ci-après abrégé bloc PO) au sens de l'invention, on entend tout polymère comprenant comme monomère une alpha-oléfine, c'est-à-dire les homopolymères d'une oléfine ou les copolymères d'au moins une alpha-oléfine et d'au moins un autre monomère copolymérisable, l'alpha-oléfine ayant avantageusement de 2 à 30 atomes de carbone.

A titre d'exemple d'alpha-oléfine, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou plus de deux.

A titre d'exemples, on peut citer :
- les homopolymères et copolymères de l'éthylène, en particulier le polyéthylène basse densité (LDPE), le polyéthylène haute densité (HDPE), le polyéthylène linéaire basse densité (LLDPE), le polyéthylène très basse densité (VLDPE), le polyéthylène obtenu par catalyse métallocène ;
- les homopolymères et copolymères du propylène,
- les polyalphaoléfines essentiellement amorphes ou attactiques (APAO),
- les copolymères éthylène/alpha-oléfine tels qu'éthylène/propylène, les élastomères EPR (éthylène-propylène-rubber), et EPDM (éthylène-propylène-diène), et les mélanges de polyéthylène avec un EPR ou un EPDM,
- les copolymères blocs styrène/éthylène-butène/styrène (SEBS), styrène/ butadiène/styrène (SBS), styrène/isoprène/styrène (SIS), et styrène/éthylène-propylène/styrène (SEPS),
- les copolymères de l'éthylène avec au moins un produit choisi parmi les sels ou les esters d'acides carboxyliques insaturés tels que par exemple les (méth)acrylates d'alkyle, l'alkyle pouvant avoir jusqu'à 24 atomes de carbone, les esters vinyliques d'acides carboxyliques saturés tels que par exemple l'acétate ou le propionate de vinyle, et les diènes tels que par exemple le 1,4-hexadiène ou le polybutadiène.

Selon un mode de réalisation avantageux de l'invention ledit au moins un bloc polyoléfine comprend du polyisobutylène et/ou du polybutadiène.

Selon un mode de réalisation particulièrement avantageux, le copolymère à blocs selon l'invention comporte au moins un bloc souple polyoléfine (bloc PO) et au moins un bloc dur hydrophile (ci après abrégé BDh) comprenant à la fois du polyamide et du polyéther, tel qu'un bloc polyétheramide, un bloc polyétheresteramide, et/ou un bloc polyétheramideimide, etc... Ledit bloc PO comprend de préférence une polyoléfine comportant des groupements terminaux acides, alcools ou amines. De préférence, le bloc PO est obtenu par dégradation thermique de polyoléfines de haut poids moléculaire pour former des polyoléfines de plus faible masse et fonctionnalisées (méthode de référence : Japanese Kokai Publication Hei-03-62804). En ce qui concerne le bloc BDh, il peut comprendre en outre au moins un polymère choisi parmi: des polymères cationiques, de type amine quaternaire et/ou dérivés phosphorés ; et/ou des polymères anioniques, de type diacide modifié, comportant un groupement sulfonate et susceptible de réagir avec un polyol. L'ajout de sel organique est alors envisageable dans la préparation du bloc BDh ou lors de la réaction entre le bloc PO et le bloc BDh. Le document US6552131 décrit la synthèse et les différentes structures possibles pour le copolymère à blocs PO et à blocs BDh, celles-ci étant bien entendu envisageables dans le procédé selon l'invention.

Par bloc polycarbonate (ci-après abrégé bloc PC) au sens de l'invention, on entend plus particulièrement tout polycarbonate aliphatique. Les polycarbonates aliphatiques sont décrits par exemple dans les documents DE2546534 et JP1009225. De tels polycarbonates homopolymères ou copolymères sont également décrits dans le doument US471203. Les demandes WO92/22600 et WO95/12629 décrivent des copolymères comprenant des blocs polycarbonate ainsi que leurs procédés de synthèse. Les blocs (et leur synthèse) décrits dans ces documents sont parfaitement envisageables pour la synthèse d'un alliage de copolymère à blocs PC selon l'invention. De préférence, les blocs polycarbonate des alliages de copolymère selon l'invention ont pour formule : 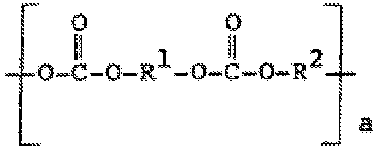 dans laquelle a est un nombre entier de 2 à 300; R1 et R2, qui peuvent être identiques ou différents, représentent une chaîne droite ou ramifiée, aliphatique ou alicyclique possédant de 2 à 18 atomes de carbone, ou bien représentent un groupement polyoxyalkylène ou encore représentent un groupement polyester.

Les polycarbonates dans lesquels R1 et R2 sont choisis parmi les groupements hexylène, décylène, dodécylène, 1,4-cyclohéxylene, 2,2-diméthyl1,3-propylène, 2,5-diméthyl-2,5-hexylène ou polyoxyéthylèene sont préférés.

Si les copolymères à blocs décrits ci-dessus comprennent généralement au moins un bloc rigide polyamide et au moins un bloc souple, il est évident que la présente invention couvre en fait tous les alliages de copolymère comprenant deux, trois, quatre (voire plus) blocs différents choisis parmi ceux décrits dans la présente description, dès l'instant qu'au moins un de ces blocs est un bloc polyamide.

Avantageusement, l'alliage de copolymère selon l'invention comprend un copolymère segmenté à blocs comprenant trois types de blocs différents (nommé «tribloc» dans la présente description de l'invention), qui résultent de la condensation de plusieurs des blocs décrits ci-dessus. Ledit tribloc est de préférence choisi parmi les copolyétheresteramides, les copolyétheramideuréthanes, dans le(s)quel(s) :
- le pourcentage massique en bloc rigide polyamide est supérieure à 10% ;
- le pourcentage massique en blocs souples est supérieur à 20% ;
sur la masse totale de tribloc.

L'alliage de copolymère à blocs de l'invention peut aussi bien être utilisé seul qu'en mélange, ledit alliage représentant en masse de 5 à 100%, de préférence de 5 à 70%, de préférence de 5 à 30%, sur la masse totale du mélange.

L'alliage de copolymère selon l'invention peut être additivé avec des stabilisants, des plastifiants, des lubrifiants, des charges naturelles ou organiques, des colorants, des pigments, de nacres, des agents antimicrobiens, des agents ignifugeants, des agents antistatiques, des agents modifiant la viscosité du copolymère, et/ou tout autre additif ou adjuvant déjà cité et bien connu de l'homme du métier dans le domaine des polymères thermoplastiques.

Avantageusement, les blocs rigides comme les blocs mous peuvent être issus de matières renouvelables et/ou de matières d'origine fossile. De manière avantageuse, lesdits blocs rigides et/ou les blocs mous sont issus au moins partiellement de matières renouvelables. Selon un mode particulièrement avantageux de la présente invention, les blocs polyamide et/ou les blocs polyéther et/ou les blocs polyester et/ou les blocs polysiloxane et/ou les blocs polyoléfine et/ou les blocs polycarbonate sont issus en totalité de matières renouvelables.

Un matériau d'origine renouvelable, appelé aussi biomatériau, est un matériau organique dans lequel le carbone provient de CO₂ fixé récemment (à l'échelle humaine) par photosynthèse à partir de l'atmosphère. Sur terre, ce CO₂ est capté ou fixé par les plantes. En mer, le CO₂ est capté ou fixé par des bactéries ou du plancton procédant à une photosynthèse. Un biomatériau (100% de carbone origine naturelle) présente un ratio isotopique ¹⁴C/¹²C supérieur à 10⁻¹², typiquement de l'ordre de 1,2 x 10⁻¹², tandis qu'un matériau fossile a un ratio nul. En effet, l'isotope ¹⁴C se forme dans l'atmosphère et est ensuite intégré par photosynthèse, selon une échelle de temps de quelques dizaines d'années au plus. La demi-vie du ¹⁴C est de 5730 ans. Donc les matériaux issus de la photosynthèse, à savoir les végétaux de manière générale, ont nécessairement une teneur maximale en isotope ¹⁴C.

La teneur en biomatériau ou teneur en biocarbone est déterminée en application des normes ASTM D 6866 (ASTM D 6866-06) et ASTM D 7026 (ASTM D 7026-04). La norme ASTM D 6866 a pour objet "Determining the Biobased Content of Natural Range Materials Using Radiocarbon and Isotope Ratio Mass Spectrometry Analysis", tandis que la norme ASTM D 7026 a pour objet "Sampling and Reporting of Results for Détermination of Biobased Content of Materials via Carbon Isotope Analysis". La seconde norme renvoie dans son premier paragraphe à la première.

La première norme décrit un test de mesure du ratio ¹⁴C/¹²C d'un échantillon et le compare avec le ratio ¹⁴C/¹²C d'un échantillon référence d'origine 100% renouvelable, pour donner un pourcentage relatif de C d'origine renouvelable dans l'échantillon. La norme est basée sur les mêmes concepts que la datation au ¹⁴C, mais sans faire application des équations de datation.

Le ratio ainsi calculé est désigné comme le "pMC" (percent Modern Carbon). Si le matériau à analyser est un mélange de biomatériau et de matériau fossile (sans isotope radioactif), alors la valeur de pMC obtenu est directement corrélée à la quantité de biomatériau présent dans l'échantillon. La valeur de référence utilisée pour la datation au ¹⁴C est une valeur datant des années 1950. Cette année a été choisie en raison de l'existence d'essais nucléaires dans l'atmosphère qui ont introduit des grandes quantités d'isotopes dans l'atmosphère après cette date. La référence 1950 correspond à une valeur pMC de 100. Compte tenu des essais thermonucléaires, la valeur actuelle à retenir est d'environ 107,5 (ce qui correspond à un facteur de correction de 0,93). La signature en carbone radioactif d'un végétal actuel est donc de 107,5. Une signature de 54 pMC et de 99 pMC correspondent donc à une quantité de biomatériau dans l'échantillon de 50% et de 93%, respectivement.

La norme ASTM D 6866 propose trois techniques de mesure de la teneur en isotope ¹⁴C:
- LSC (Liquid Scintillation Counting) spectrométrie à scintillation liquide. Cette technique consiste à compter des particules "Bêta" issues de la désintégration du ¹⁴C. On mesure le rayonnement Bêta issu d'un échantillon de masse connue (nombre d'atomes C connu) pendant un certain temps. Cette "radioactivité" est proportionnelle au nombre d'atomes de ¹⁴C, que l'on peut ainsi déterminer. Le ¹⁴C présent dans l'échantillon émet des rayonnements β, qui au contact du liquide scintillant (scintillateur) donnent naissance à des photons. Ces photons ont des énergies différentes (comprises entre 0 et 156 keV) et forment ce que l'on appelle un spectre de ¹⁴C. Selon deux variantes de cette méthode, l'analyse porte soit sur le CO₂ préalablement produit par l'échantillon carboné dans une solution absorbante appropriée, soit sur le benzène après conversion préalable de l'échantillon carboné en benzène. La norme ASTM D 6866 donne donc deux méthodes A et C, basées sur cette méthode LSC.
- AMS/IRMS (Accelerated Mass Spectrometry couplé avec Isotope Radio Mass Spectrometry). Cette technique se base sur la spectrométrie de masse. L'échantillon est réduit en graphite ou en CO₂ gazeux, analysé dans un spectromètre de masse. Cette technique utilise un accélérateur et un spectromètre de masse pour séparer les ions ¹⁴C des ¹²C et donc déterminer le rapport des deux isotopes.

Les alliages de copolymère selon l'invention proviennent au moins en partie de biomatériau et présentent donc une teneur en biomatériau d'au moins 1%, ce qui correspond à une teneur en ¹⁴C d'au moins 1,2 x 10⁻¹⁴. Cette teneur est avantageusement plus élevée, notamment jusqu'à 100%, qui correspond à une teneur en ¹⁴C de 1,2 x 10⁻¹². Les alliages selon l'invention peuvent donc comprendre 100% de bio-carbone ou au contraire résulter d'un mélange avec une origine fossile. La présente invention a également pour objet l'utilisation d'un alliage de copolymère à blocs selon l'invention dans une matrice polymère thermoplastique pour améliorer les propriétés antistatiques de ladite matrice. Ladite matrice polymère comprend au moins un polymère thermoplastique, homopolymère ou copolymère, choisi parmi : des polyoléfines, des polyamides, des polymères fluorés, des polyesters saturés, du polycarbonate, des résines styréniques, du PMMA, des polyuréthanes thermoplastiques (TPU), des copolymères de l'éthylène et de l'acétate de vinyle (EVA), des copolymères à blocs polyamide et blocs polyéther, des copolymères à blocs polyester et blocs polyéther, des copolymères à blocs polyamide, à blocs polyéther et à blocs polyester, des copolymères de l'éthylène et d'un (méth)acrylate d'alkyle, des copolymères de l'éthylène et de l'alcool vinylique (EVOH), de l'ABS, du SAN, de l'ASA, du polyacétal, des polycétones et leurs mélanges.

La présente invention a encore pour objet une composition comportant de 1 à 40% en poids d'au moins un alliage de copolymère à blocs selon l'invention et de 60 à 99% en poids d'une matrice polymère telle que définie précédemment, sur le poids total de la composition.

De préférence la composition selon la présente invention comporte de 10 à 30% en poids d'au moins un alliage de copolymère à blocs selon l'invention et de 70 à 90% en poids d'une matrice polymère telle que définie précédemment, sur le poids total de la composition.

Les compositions de l'invention ont des propriétés antistatiques améliorées en raison de la diminution de résistivité superficielle apportée par l'incorporation d'au moins un alliage de copolymère à blocs selon l'invention dans au moins une partie d'une matrice polymère telle que définie précédemment. L'ajout dudit au moins un alliage de copolymère à ladite matrice est réalisable par tous procédés bien connus de l'homme du métier dans le domaine des polymères, notamment par mélange à sec, ou par malaxage à une température supérieure à la température de transition vitreuse des différents polymères ajoutés, ou par cisaillement à une température sensiblement égale à la température de fluidisation des différents polymères ajoutés, notamment par calandrage, par extrusion, ou encore par mélange en solution.

### Exemples

Les exemples ci-dessous illustrent la présente invention sans en limiter la portée. Dans les exemples, sauf indication contraire, tous les pourcentages et parties sont exprimés en poids.

### Produits utilisés dans les exemples:

PEG 1500 : dihydroxy poly(éthylène glycol) de Mn = 1500 g/mol.

Sels organiques :
LI1 : 1-éthyl-3-méthyl imidazolium bis(trifluorométhanesulfonyl)imide
LI2 : 1-éthyl-3-méthyl imidazolium méthanesulfonate
LI3 : N-triméthyl-N-butylammonium bis(trifluorométhanesulfonyl)imide

### Synthèse d'un bloc PA12 de masse molaire proche de 1500 q/mol

Dans un autoclave, 4300 g de Lactame 12 et 464g d'acide adipique sont chargés avec 300 g d'eau. La température du milieu réactionnel est amenée à 280°C en environ 2h15, puis un palier de 3h à 280°C est effectué. Une détente est ensuite appliquée pour revenir à pression atmosphérique en environ 1h25, pour ensuite effectuer 2h de balayage sous azote avant extrusion du bloc. Une analyse des fins de chaînes COOH indique que la masse molaire Mn du bloc est de 1560 g/mol.

### Synthèse d'un bloc PA12 de masse molaire 2000 q/mol

Dans un autoclave, 4500 g de Lactame 12 et 355g d'acide adipique sont chargés avec 340g d'eau. La température du milieu réactionnel est amenée à 280°C en environ 2h10, puis un palier de 3h à 280°C est effectué. Une détente est ensuite appliquée pour revenir à pression atmosphérique en environ 1h20, pour ensuite effectuer 2h de balayage sous azote avant extrusion du bloc. Une analyse des fins de chaînes COOH indique que la masse molaire Mn du bloc est de 2000g/mol.

### Synthèse du bloc PA 6/12 (CoPA 1)

Dans un autoclave, 300 g de Lactame 6, 1200 g de Lactame 12 et 190g d'acide adipique sont chargés avec 127 g d'eau. La température du milieu réactionnel est amenée à 280°C en environ 1h40, puis un palier de 2h à 280°C et sous 21 bars de pression est effectué. Une détente est ensuite appliquée pour revenir à pression atmosphérique en environ 1h, pour ensuite effectuer 50 min de balayage sous azote avant extrusion du bloc. Une analyse des fins de chaînes COOH indique que la masse molaire Mn du bloc est de 1430 g/mol.

### Synthèse du bloc PA 6/12 en présence de LI2 (CoPA 2) : incorporation de LI2 au cours de l'étape I :

Dans un autoclave, 264 g de Lactame 6, 1056 g de Lactame 12, 167.2g d'acide adipique et 32.7g de LI2 sont chargés avec 112 g d'eau. La température du milieu réactionnel est amenée à 280°C en environ 1h30, puis un palier de 2h à 280°C et sous 19.5 bars de pression est effectué. Une détente est ensuite appliquée pour revenir à pression atmosphérique en environ 1h10, pour ensuite effectuer 50min de balayage sous azote avant extrusion du bloc. Une analyse des fins de chaînes COOH indique que la masse molaire Mn du bloc est de 1325 g/mol.

### Exemple 1

Dans un réacteur en verre équipé d'un agitateur à ancre, on introduit 30 g du bloc PA12 réalisé ci-dessus et 30 de PEG (1500 g/mol). Le milieu réactionnel est inerté par 10 min de balayage sous azote. L'ensemble est placé dans un bain d'huile afin d'atteindre une température matière d'environ 240 °C (+/- 5°C). Une fois le mélange complètement fondu, l'agitation est démarrée. Au bout d'1h de balayage sous azote, 0.608g de LI1 est introduit dans le milieu réactionnel (par exemple via une seringue). La pression dans le réacteur est ensuite réduite pour atteindre 2 mbar, puis 0.3% en poids de Zr(OBu)4 sont ajoutés via injection à la seringue d'une solution concentrée dans le toluène. L'agitation est fixée à 250 tr/min. Le couple atteint 20 N.cm au bout de 10 minutes environ après la mise sous vide.

### Exemple Comparatif 1

Un essai est ensuite réalisé en utilisant le même procédé que pour l'exemple 1, en introduisant les mêmes quantités de PA12 (1500 g/mol) et de PEG (1500 g/mol), mais sans ajouter d'autres matières premières. Le couple atteint 20 N.cm au bout de 18 min environ après la mise sous vide.

### Exemple 2

Un essai est ensuite réalisé en utilisant le même procédé que pour l'exemple 1, en introduisant les mêmes quantités de PA12 et de PEG 1500, mais en utilisant 0.304g de LI1. Le couple atteint 20 N.cm au bout de 15 min environ après la mise sous vide.

### Exemple 3

Un essai est ensuite réalisé en utilisant le même procédé que pour l'exemple 1, en introduisant les mêmes quantités de PA12 et de PEG 1500, mais en utilisant 1.52g de LI1. Le couple atteint 20 N.cm au bout de 15 min environ après la mise sous vide.

### Exemple 4

Un essai est ensuite réalisé en utilisant le même procédé que pour l'exemple 1, en introduisant les mêmes quantités de PA12 et de PEG 1500, mais en utilisant 0.62g de LI2. Le couple atteint 20 N.cm au bout de 13 min.

Dans les exemples 1 à 4, la viscosité (correspondant au couple 20 N.cm) de l'alliage de copolymère est atteinte beaucoup plus rapidement grâce à l'ajout de sel organique au cours de l'étape II de polycondensation pour obtenir le copolymère à blocs (étape II). L'ajout de sel organique (exemples 1-4) au cours de l'étape II accélère la cinétique de réaction de polymérisation entre le bloc PA et le bloc PEG, comparé à la même réaction de polymérisation sans l'ajout de sel organique (comparatif 1).

### Comparatif 9

Un essai est ensuite réalisé en utilisant le même procédé que pour l'exemple comparatif 1, en introduisant 30g de CoPA1, 31.5g de PEG 1500 sans ajout de sel organique. Le couple atteint 20 N.cm au bout de 66 min environ après la mise sous vide.

### Exemple 13

Un essai est ensuite réalisé en utilisant le même procédé que pour l'exemple 1, en introduisant 30g de PA12, 30g de PEG 1500 et 0.572g de LI1. Le couple atteint 20 N.cm au bout de 10 min environ après la mise sous vide.

### Exemple 14

Un essai est ensuite réalisé en utilisant le même procédé que pour l'exemple 1, en introduisant 30g de PA12, 30g de PEG 1500 et 0.572g de LI3. Le couple atteint 20 N.cm au bout de 13 min environ après la mise sous vide

L'ajout de sel organique (exemples 13 et 14) au cours de l'étape II accélère la cinétique de réaction de polymérisation entre le bloc PA et le bloc PEG, comparé à la même réaction de polymérisation sans l'ajout de sel organique (comparatif 9).

### Exemples 5-7

Le tableau 1 suivant indique la résistivité surfacique en Ohm/carré des exemples 5 à 7 par rapport à des comparatifs 1 à 5 non conformes à l'invention.

Dans l'exemple 5, on réalise un alliage suivant le même mode opératoire que les exemples 1 à 4, mais en utilisant 1% en poids de LI1 sur le poids total (copolymère à blocs + sel organique).

La résistivité surfacique de matrices respectivement en polyéthylène PE (comparatif 2) et en polystyrène PS (comparatif 4) est diminuée d'au moins une décade par incorporation de 20% en poids de copolymère à blocs (PA12-PEG) sur le poids total I de la composition dans les comparatifs 3 et 5 respectivement.

La résistivité surfacique de matrices respectivement en polyéthylène PE (comparatif 2) et en polystyrène PS (comparatif 4) est diminuée d'au moins trois décades par incorporation de 20% en poids d'un mélange (99% copolymère à blocs PA12-PEG + 1% LI1) sur le poids total de la composition dans les exemples 6 et 7.

### Exemple comparatif 10

Un essai est ensuite réalisé en utilisant le même procédé que pour l'exemple comparatif 1, en introduisant 30g de PA12 de masse 2000 g/mol et 30g de PTMG 2000

### Exemple 15

Un essai est ensuite réalisé en utilisant le même procédé que pour l'exemple 1, en introduisant 30g de PA12 de masse 2000 g/mol, 30g de PTMG 2000 et 0.608g de LI1.

Dans l'exemple 15, pour un copolymer à blocs polyéther sur base PTMG, la resistivité est diminuée efficacement (d'au moins trois décades) par l'ajout de sel organique (1% LI1), comparé à l'exemple comparatif 10.

**Tableau 1**

| | Composition (% en poids) | | | Résistivité surfacique (Ohm/carré) |
|---|---|---|---|---|
| | Copolymère à blocs | Sel organique | Matrice | |
| Comparatif 1 | 100% PA12-PEG | | | 10⁹ |
| Exemple 5 | 99% PA12-PEG | 1% LI1 | | 10⁷ |
| Comparatif 2 | | | 100% PE | 10¹⁴ |
| Comparatif 3 | 20% PA12-PEG | | 80% PE | 10¹³ |
| Exemple 6 | 20%(99% PA12-PEG) | 20%(1% LI1) | 80% PE | 10¹¹ |
| Comparatif 4 | | | 100% PS | 10¹⁴ |
| Comparatif 5 | 20% PA12-PEG | | 80% PS | 10¹¹ |
| Exemple 7 | 20%(99% PA12-PEG) | 20%(1% LI1) | 80% PS | 10⁹ |
| Comparatif 10 | 100% PA12-PTMG | | | >10¹² |
| Exemple 15 | 99% PA12-PTMG) | 1% LI1 | | 10⁹ |

### Exemples 8-11

Dans le tableau 2 suivant, le boc PEG a une masse molaire de 1500g/mol. Le bloc PA 6/12 a une masse molaire de 1500g/mol.

La matrice dans les comparatifs 7, 8 et les exemples 9, 10 est un terpolymère acrylonitrile/butadiène/styrène (ABS) de grade MAGNUM 3453 MFI14 (Dow)

**Tableau 2**

| | Composition (% en poids) | | | Résistivité surfacique (Ohm/carré) |
|---|---|---|---|---|
| | Copolymère à blocs | Sel organique | Matrice | |
| Comparatif 6 | 100% PA6/12-PEG | | | 10⁹ |
| Comparatif 7 | | | 100% ABS | 10¹³ |
| comparatif 8 | 20% PA6/12-PEG | | 80% ABS | 10¹⁰ |
| Exemple 8 | 99% PA6/12-PEG | 1% LI2 étape I | | 10^{7,8} |
| Exemple 9 | 20%(99% PA6/12-PEG +1% LI2 étape I) | | 80% ABS | 10 ^{9,8} |
| Exemple 10 | 99% PA6/12-PEG | 1% LI2 étape II | | 10^{7,4} |
| Exemple 11 | 20%(99% PA6/12-PEG +1% LI2 étape II) | | 80% ABS | 10⁸ |
| Exemple 16 | 99% PA6/12-PEG | 1% LI2 étape III) | | 10 ⁷ |
| Exemple 17 | 20%(99% PA6/12-PEG +1% LI2 étape III) | | 80% ABS | 10⁸ |

La résistivité surfacique de l'ABS (comparatif 7) est diminuée de 3 décades dans le comparatif 8 qui incorpore 20% en poids d'un copolymère à blocs PA6/12-PEG.

### Exemple 8 (incorporation de LI à l'étape I)

Un essai est ensuite réalisé en utilisant le même procédé que pour l'exemple comparatif 1, en introduisant 30g de **CoPA2** et 33.9g de PEG 1500.

### Exemple 10 (incorporation de LI à l'étape II)

Un essai est ensuite réalisé en utilisant le même procédé que pour l'exemple 1, en introduisant 30g de **CoPA1,** 31.5g de PEG 1500 et 0.6235g de LI2. Le couple atteint 20 N.cm au bout de 45 min environ après la mise sous vide.

### Exemple 16 (incorporation de LI à l'étape III) selon l'invention

Un essai est ensuite réalisé en introduisant 29.7 g de produit issu de l'exemple comparatif 9 avec 0.3 g de LI2 dans un mélangeur que l'on met en rotation sous vide à 60 °C pendant 8h.

La résistivité surfacique d'un copolymère à blocs PA6/12-PEG (comparatif 6) est diminuée d'au moins 2 décades par incorporation d'un sel organique LI2 au cours de l'étape I de fabrication du bloc PA6/12 (exemple 8), ou bien au cours de l'étape II de polycondensation pour obtenir un copolymère à blocs PA6/12-PEG (exemple 10), ou bien au cours de l'étape III de récupération de l'alliage de copolymère (exemple 16 selon l'invention).

La résistivité surfacique de l'ABS (comparatif 7) est diminuée d'au moins 3 décades dans l'exemple 9. Cet exemple 9 selon l'invention est une composition comprenant 20% d'un alliage de copolymère (exemple 8) incorporé par compoundage à 80% de matrice ABS. Dans l'exemple 9, ledit alliage de copolymère PA6/12-PEG comprend 1% de LI2 incorporé lors de l'étape I du procédé.

La résistivité surfacique de l'ABS (comparatif 7) est diminuée de 5 décades dans l'exemple 11. Cet exemple 11 est une composition comprenant 20% d'un alliage de copolymère (exemple 10) incorporé par compoundage à 80% de matrice ABS. Dans l'exemple 11, ledit alliage de copolymère PA6/12-PEG comprend 1% de LI2 incorporé lors de l'étape II du procédé.

L'incorporation de sel organique en particulier au cours de l'étape II du procédé non seulement accélère la cinétique de réaction de polymérisation entre le bloc PA et le bloc souple (ici polyéther), mais aussi diminue plus efficacement la résistivité de l'alliage de copolymère et diminue plus efficacement la résistivité d'une matrice polymère l'incorporant, comparativement à l'incorporation de sel organique au cours de l'étape I du procédé.

La résistivité surfacique de l'ABS (comparatif 7) est diminuée de 5 décades dans l'exemple 17. Cet exemple 17 selon l'invention est une composition comprenant 20% d'un alliage de copolymère selon l'invention (exemple 16) incorporé par compoundage à 80% de matrice ABS. Dans l'exemple 9, ledit alliage de copolymère PA6/12-PEG comprend 1% de LI2 incorporé lors de l'étape I du procédé.

Quelle que soit l'étape d'incorporation du sel organique dans le procédé, l'effet antistatique du Pebax ainsi « dopé » avec un sel organique, est décuplé comparé à l'effet du Pebax seul.

### Propriétés mécaniques et physico-chimiques des copolymères selon l'invention :

Le Tableau 3 suivant montre les résultats d'analyse DMA effectués à l'aide d'un appareil Thermal Analysis TA DMA Q800 : mesure en tension à 1 Hz et rampe de 3°C / min. Les blocs du PA6/12 - PEG utilisé ont une masse molaire respectivement de : 1430 - 1500 g/mol.

**Tableau 3**

| Composition | Tg°C (prise au max de E") | Module E' (23°C) |
|---|---|---|
| PA6/12 - PEG | -45°C | 70 MPa |
| PA6/12 - PEG + 1% LI2 (exemple 8) | -45°C | 70 MPa |
| PA6/12 - PEG + 1% LI2 (exemple 10) | -45°C | 70 MPa |
| PA6/12 - PEG + 1% LI2 (exemple 16) | -45°C | 70 MPa |

L'incorporation d'un sel organique (quelle que soit l'étape d'incorporation : I, II, ou III pour respectivement les exemples 8, 10 ou 16) permet d'obtenir un alliage de copolymère ayant les mêmes propriétés mécaniques (module, Tg) que celles du copolymère seul, c'est-à-dire sans ajout de sel organique.

## Revendications

1. Procédé de synthèse d'un alliage à base de copolymère à blocs comprenant au moins un bloc rigide polyamide PA, comprenant les étapes suivantes :
- I- Fabrication d'au moins un bloc polyamide PA;
- II- Polycondensation d'au moins un bloc mou BM de température de transition vitreuse Tg inférieure à 15°C, avec ledit au moins un bloc polyamide PA pour obtenir un copolymère à blocs ; et
- III- Récupération dudit alliage de copolymère à blocs,
l'étape III comprenant les sous-étapes suivantes :
- III-1- Ajustement de la viscosité de l'alliage de copolymère,
- III-2- Extrusion de l'alliage de copolymère, et
- III-3- Etuvage de l'alliage.
et comprenant l'ajout au copolymère à blocs, lors de l'étape III, de 0,1 à 30% en poids d'au moins un sel organique à l'état fondu par rapport au poids total d'alliage; de sorte que l'alliage obtenu présente des propriétés antistatiques améliorées et des propriétés mécaniques identiques, comparées au même copolymère fabriqué sans ajout de sel organique,
le sel organique étant ajouté au copolymère à blocs, lors de l'étape III-3, au moyen d'un liquide d'imprégnation contenant le sel organique pur ou dilué dans un solvant.

2. Procédé selon la revendication 1, dans lequel ledit au moins un sel organique comprend au moins un cation comprenant au moins une des molécules suivantes : ammonium, sulfonium, pyridinium, pyrrolidinium, imidazolium, imidazolinium, phosphonium, lithium, guanidinium, piperidinium, thiazolium, triazolium, oxazolium, pyrazolium, et leurs leurs mélanges.

3. Procédé selon l'une quelconque des revendications 1 ou 2, dans lequel ledit au moins un sel organique comprend au moins un anion comprenant au moins une des molécules suivantes : les imides, notamment bis(trifluorométhanesulfonyl)imide; les borates, notamment tétrafluoroborate; les phosphates, notamment hexafluorophosphate; les phosphinates et les phosphonates, notamment les alkyl-phosphonates ; les amides, notamment dicyanamide; les aluminates, notamment tetrachloroaluminate; les halogénures, tels que les anions bromure, chlorure, iodure; les cyanates ; les acétates, notamment trifluoroacétate ; les sulfonates, notamment méthanesulfonate, trifluorométhanesulfonate ; les sulfates, notamment ethyl sulfate, hydrogène sulfate ; et leurs leurs mélanges.

4. Procédé selon l'une quelconque des revendications 1 à 3, dans lequel ladite étape I comprend la polycondensation de précurseurs de polyamide en présence d'un régulateur de chaîne.

5. Procédé selon l'une quelconque des revendications 1 à 4, dans lequel les étapes I et II sont réalisées simultanément.

6. Procédé selon l'une quelconque des revendications 1 à 5, comprenant en outre l'addition d'agents améliorant la conductivité superficielle au cours de l'étape I, Il et/ou III, lesdits agents étant choisis parmi : des agents hygroscopiques ; des acides gras ; des lubrifiants ; des métaux ; des pellicules métalliques ; des poudres métalliques ; des nanopoudres métalliques ; des aluminosilicates ; des aminés, telles que des amines quaternaires ; des esters ; des fibres ; du noir de carbone ; des fibres de carbone ; des nanotubes de carbone ; du polyéthylène glycol ; des polymères intrinsèquement conducteurs, tels que des dérivés de polyaniline, de polythiophène, du polypyrrole ; des masterbatches ; et leurs mélanges.

7. Procédé selon l'une quelconque des revendications 1 à 6, comprenant en outre l'addition d'additifs et/ou d'adjuvants au cours de l'étape I, Il et/ou III, lesdits additifs et/ou d'adjuvants étant choisis parmi : les charges organiques ou inorganiques, les renforts, les plastifiants, les stabilisants, les anti-oxydants, anti-UV, les retardateurs de flamme, le noir de carbone, les nanotubes de carbone ; les colorants minéraux ou organiques, les pigments, les colorants, les agents de démoulage, lubrifiants, moussants, les agents anti-choc, agents anti-retrait, les agents ignifugeants, les agents nucléants, et leurs mélanges.

8. Alliage de copolymère à blocs à propriétés antistatiques améliorées, comprenant au moins un bloc rigide polyamide et au moins un bloc mou, obtenu par le procédé de synthèse de l'une quelconque des revendications 1 à 7, ledit alliage incorporant de 0,1 à 30% en poids d'au moins un sel organique sur le poids total de l'alliage, et dans lequel la teneur totale en polyéthylène glycol PEG est d'au moins 50% en poids, sur le poids total de l'alliage, la proportion massique dudit au moins un bloc rigide polyamide représente de 5 à 95%, de préférence de 15 à 95%, la proportion massique dudit au moins un bloc mou représente de 5 à 95%, de préférence de 5 à 85%, sur la masse totale du copolymère, ledit alliage comprenant au moins un bloc polyéther comprenant au moins 50% en poids de PEG sur le poids total de bloc(s) polyéther(s).

9. Alliage de copolymère selon la revendication 8, dans lequel ledit au moins un bloc rigide et/ou ledit au moins un bloc mou sont issus au moins partiellement de matières premières renouvelables.

10. Alliage selon la revendication 9, comprenant une teneur en bio-carbone d'au moins 1%, qui correspond à un ratio isotopique de ¹⁴C/¹²C d'au moins 1,2.10⁻¹⁴.

11. Alliage selon la revendication 10, comprenant une teneur en bio-carbone supérieure à 5%, de préférence supérieure à 10%, de préférence supérieure à 25%, de préférence supérieure à 50%, de préférence supérieure à 75%, de préférence supérieure à 90%, de préférence supérieure à 95%, de préférence supérieure à 98%, de préférence supérieure à 99%, avantageusement sensiblement égale à 100%.

12. Alliage de copolymère selon l'une quelconque des revendications 8 à 11, dans lequel ledit au moins un bloc polyamide comprend au moins une des molécules suivantes : du PA 12, du PA11, du PA10.10, du PA6, du PA6/12, un copolyamide comprenant au moins un des monomères suivants : 11, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T et leurs mélanges ou copolymères.

13. Alliage de copolymère selon l'une quelconque des revendications 8 à 12, dans lequel ledit au moins un bloc mou est choisi parmi les blocs polyéther ; les blocs polyester ; les blocs polysiloxane, tels que les blocs polydiméthylsiloxane ; les blocs polyoléfine ; les blocs polycarbonate ; et leurs mélanges.

14. Alliage selon l'une quelconque des revendications 8 à 13, dans lequel ledit copolymère comprend un PEBA.

15. Alliage de copolymère selon la revendication 14, dans lequel ledit PEBA comprend du PA12-PEG, PA6-PEG, PA6/12-PEG, PA11-PEG, PA12-PTMG, PA6-PTMG, PA6/12-PTMG, PA11-PTMG, PA12-PEG/PPG, PA6-PEG/PPG, PA6/12-PEG/PPG, et/ou PA11-PEG/PPG.

16. Alliage de copolymère selon l'une quelconque des revendications 8 à 15, dans lequel le copolymère est un copolymère segmenté à blocs comprenant trois types de blocs différents, ledit copolymère étant choisi parmi les copolyétheresteramides, les copolyétheramideuréthanes, dans le(s)quel(s) :
- le pourcentage massique en bloc rigide polyamide est supérieure à 10% ;
- le pourcentage massique en bloc mou est supérieur à 20% ;
sur la masse totale de copolymère.

17. Composition comprenant un alliage de copolymère selon l'une quelconque des revendications 8 à 16, ledit alliage représentant en masse de 5 à 100%, de préférence de 5 à 70%, de préférence de 5 à 30%, sur la masse totale de la composition.

18. Utilisation d'un alliage de copolymère à blocs selon l'une quelconque des revendications 8 à 16 ou d'une composition selon la revendication 17, dans une matrice polymère thermoplastique pour améliorer les propriétés antistatiques de ladite matrice.

19. Utilisation selon la revendication 18, dans laquelle ladite matrice polymère comprend au moins un polymère thermoplastique, homopolymère ou copolymère, choisi parmi : des polyoléfines, des polyamides, des polymères fluorés, des polyesters saturés, du polycarbonate, des résines styréniques, du PMMA, des polyuréthanes thermoplastiques (TPU), des copolymères de l'éthylène et de l'acétate de vinyle (EVA), des copolymères à blocs polyamide et blocs polyéther, des copolymères à blocs polyester et blocs polyéther, des copolymères à blocs polyamide, à blocs polyéther et à blocs polyester, des copolymères de l'éthylène et d'un (méth)acrylate d'alkyle, des copolymères de l'éthylène et de l'alcool vinylique (EVOH), de l'ABS, du SAN, de l'ASA, du polyacétal, des polycétones et leurs mélanges.

20. Composition comportant de 1 à 40% en poids d'au moins un alliage de copolymère à blocs selon l'une quelconque des revendications 1 à 16 et de 60 à 99% en poids d'une matrice polymère telle que définie à la revendication 19.

## Patentansprüche

1. Verfahren zur Synthese einer Legierung auf Basis eines Blockcopolymers mit mindestens einem steifen Polyamidblock PA, das folgende Schritte umfasst:
- I- Herstellung mindestens eines Polyamidblocks PA;
- II- Polykondensation mindestens eines weichen Blocks WB mit einer Glasübergangstemperatur Tg unter 15 °C mit dem mindestens einen Polyamidblock PA zum Erhalt eines Blockcopolymers; und
- III- Gewinnung der Blockcopolymerlegierung,
wobei Schritt III die folgenden Unterschritte umfasst:
- III-1- Einstellung der Viskosität der Copolymerlegierung,
- III-2- Extrusion der Copolymerlegierung und
- III-3- Tempern der Legierung,
und die Zugabe von 0,1 bis 30 Gew.-% mindestens eines organischen Salzes in schmelzflüssigem Zustand, bezogen auf das Gesamtgewicht von Legierung, zu dem Blockcopolymer während Schritt III umfasst; so dass die erhaltene Legierung verbesserte antistatische Eigenschaften und identische mechanische Eigenschaften im Vergleich mit dem gleichen, ohne Zugabe eines organischen Salzes hergestellten Copolymer aufweist,
wobei das organische Salz mit Hilfe einer Imprägnierflüssigkeit, die das organische Salz rein oder in einem Lösungsmittel verdünnt enthält, während Schritt III-3 zu dem Blockcopolymer gegeben wird.

2. Verfahren nach Anspruch 1, wobei das mindestens eine organische Salz mindestens ein Kation umfasst, das mindestens eines der folgenden Moleküle umfasst: Ammonium, Sulfonium, Pyridinium, Pyrrolidinium, Imidazolium, Imidazolinium, Phosphonium, Lithium, Guanidinium, Piperidinium, Thiazolium, Triazolium, Oxazolium, Pyrazolium und Mischungen davon.

3. Verfahren nach einem der Ansprüche 1 oder 2, wobei das mindestens eine organische Salz mindestens ein Anion umfasst, das mindestens eines der folgenden Moleküle umfasst: Imide, insbesondere Bis-(trifluormethansulfonyl)imid; Borate, insbesondere Tetrafluoroborat; Phosphate, insbesondere Hexafluorophosphat; Phosphinate und Phosphonate, insbesondere Alkylphosphonate; Amide, insbesondere Dicyanamid; Aluminate, insbesondere Tetrachloroaluminat; Halogenide, wie Bromid-, Chlorid- oder Iodid-Anionen; Cyanate; Acetate, insbesondere Trifluoracetat; Sulfonate, insbesondere Methansulfonat, Trifluormethansulfonat; Sulfate, insbesondere Ethylsulfat oder Hydrogensulfat; und Mischungen davon.

4. Verfahren nach einem der Ansprüche 1 bis 3, wobei der Schritt I die Polykondensation von Polyamid-Vorstufen in Gegenwart eines Kettenreglers umfasst.

5. Verfahren nach einem der Ansprüche 1 bis 4, wobei die Schritte I und II gleichzeitig durchgeführt werden.

6. Verfahren nach einem der Ansprüche 1 bis 5, ferner umfassend den Zusatz von die Oberflächenleitfähigkeit verbessernden Mitteln im Lauf von Schritt I, II und/oder III, wobei die Mittel aus: hygroskopischen Mitteln; Fettsäuren; Schmiermitteln; Metallen; Metallfilmüberzügen; Metallpulvern; Metallnanopulvern; Aluminosilikaten; Aminen, wie quaternären Aminen; Estern; Fasern; Ruß; Kohlenstofffasern; Kohlenstoffnanoröhren; Polyethylenglykol; intrinsisch leitfähigen Polymeren, wie Polyanilin-, Polythiophen- oder Polypyrrolderivaten; Masterbatches; und Mischungen davon ausgewählt sind.

7. Verfahren nach einem der Ansprüche 1 bis 6, ferner umfassend den Zusatz von Zusatzstoffen und/oder Hilfsstoffen im Lauf von Schritt I, II und/oder III, wobei die Zusatzstoffe und/oder Hilfsstoffe aus: organischen oder anorganischen Füllstoffen, Verstärkungsmitteln, Weichmachern, Stabilisatoren, Antioxidantien, Anti-UV-Mitteln, flammhemmenden Mitteln, Ruß, Kohlenstoffnanoröhren; mineralischen oder organischen Farbstoffen, Pigmenten, Farbstoffen, Formtrennmitteln, Schmiermitteln, Schäumungsmitteln, Schlagzähigkeitsvermittlern, Antischrumpfmitteln, Flammschutzmitteln, Keimbildnern und Mischungen davon ausgewählt sind.

8. Blockcopolymerlegierung mit verbesserten antistatischen Eigenschaften, umfassend mindestens einem steifen Polyamidblock und mindestens einen weichen Block, erhalten durch das Syntheseverfahren nach einem der Ansprüche 1 bis 7, wobei die Legierung 0,1 bis 30 Gew.-% mindestens eines organischen Salzes, bezogen auf das Gesamtgewicht der Legierung, enthält, und in der der Gesamtgehalt an Polyethylenglykol PEG mindestens 50 Gew.-%, bezogen auf das Gesamtgewicht der Legierung, beträgt, wobei der Massenanteil des mindestens einen steifen Polyamidblocks 5 bis 95 %, vorzugsweise 15 bis 95 %, und der Massenanteil des mindestens einen weichen Blocks 5 bis 95 %, vorzugsweise 5 bis 85 %, bezogen auf die Gesamtmasse des Copolymers, beträgt, wobei die Legierung mindestens einen Polyetherblock mit mindestens 50 Gew.-% PEG, bezogen auf das Gesamtgewicht des Polyetherblocks bzw. der Polyetherblöcke, umfasst.

9. Copolymerlegierung nach Anspruch 8, wobei der mindestens eine steife Block und/oder der mindestens eine weiche Block zumindest teilweise aus erneuerbaren Ausgangsstoffen hervorgegangen sind.

10. Legierung nach Anspruch 9, umfassend einen Biokohlenstoff-Gehalt von mindestens 1 %, was einem ¹⁴C/¹²C-Isotopenverhältnis von mindestens 1,2.10⁻¹⁴ entspricht.

11. Legierung nach Anspruch 10, umfassend einen Biokohlenstoff-Gehalt von mehr als 5 %, vorzugsweise mehr als 10 %, vorzugsweise mehr als 25 %, vorzugsweise mehr als 50 %, vorzugsweise mehr als 75 %, vorzugsweise mehr als 90 %, vorzugsweise mehr als 95 %, vorzugsweise mehr als 98 %, vorzugsweise mehr als 99 %, vorteilhafterweise weitgehend gleich 100 %.

12. Copolymerlegierung nach einem der Ansprüche 8 bis 11, wobei der mindestens eine Polyamidblock mindestens eines der folgenden Moleküle umfasst: PA12, PA11, PA10.10, PA6, PA6/12, ein Copolyamid mit mindestens einem der folgenden Monomere: 11, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T, und Mischungen oder Copolymere davon.

13. Copolymerlegierung nach einem der Ansprüche 8 bis 12, wobei der mindestens eine weiche Block aus Polyetherblöcken; Polyesterblöcken; Polysiloxanblöcken, wie Polydimethylsiloxanblöcken; Polyolefinblöcken; Polycarbonatblöcken und Mischungen davon ausgewählt ist.

14. Legierung nach einem der Ansprüche 8 bis 13, wobei das Copolymer ein PEBA umfasst.

15. Copolymerlegierung nach Anspruch 14, wobei das PEBA PA12-PEG, PA6-PEG, PA6/12-PEG, PA11-PEG, PA12-PTMG, PA6-PTMG, PA6/12-PTMG, PA11-PTMG, PA12-PEG/PPG, PA6-PEG/PPG, PA6/12-PEG/PPG und/oder PA-PEG/PPG umfasst.

16. Copolymerlegierung nach einem der Ansprüche 8 bis 15, wobei es sich bei dem Copolymer um ein segmentiertes Blockcopolymer mit drei verschiedenen Typen von Blöcken handelt, wobei das Copolymer aus Copolyetheresteramiden und Copolyetheramidurethanen ausgewählt ist, wobei:
- der Massenprozentanteil an steifem Polyamidblock mehr als 10 % beträgt;
- der Massenprozentanteil an weichem Block mehr als 20 % beträgt;
bezogen auf die Gesamtmasse von Copolymer.

17. Zusammensetzung, umfassend eine Copolymerlegierung nach einem der Ansprüche 8 bis 16, wobei die Legierung 5 bis 100 Massen-%, vorzugsweise 5 bis 70 Massen-%, vorzugsweise 5 bis 30 Massen-%, bezogen auf die Gesamtmasse der Zusammensetzung, ausmacht.

18. Verwendung einer Blockcopolymerlegierung nach einem der Ansprüche 8 bis 16 oder einer Zusammensetzung nach Anspruch 17 in einer thermoplastischen Polymermatrix zur Verbesserung der antistatischen Eigenschaften der Matrix.

19. Verwendung nach Anspruch 18, wobei die Polymermatrix mindestens ein thermoplastisches Polymer, bei dem es sich um ein Homopolymer oder Copolymer handelt, umfasst, das aus: Polyolefinen, Polyamiden, Fluorpolymeren, gesättigten Polyestern, Polycarbonat, Styrolharzen, PMMA, thermoplastischen Polyurethanen (TPU), Copolymeren von Ethylen und Vinylacetat (EVA), Copolymeren mit Polyamidblöcken und Polyetherblöcken, Copolymeren mit Polyesterblöcken und Polyetherblöcken, Copolymeren mit Polyamidblöcken, Polyetherblöcken und Polyesterblöcken, Copolymeren von Ethylen und einem Alkyl(meth)acrylat, Copolymeren von Ethylen und Vinylalkohol (EVOH), ABS, SAN, ASA, Polyacetal, Polyketonen und Mischungen davon ausgewählt ist.

20. Zusammensetzung, umfassend 1 bis 40 Gew.-% mindestens einer Blockcopolymerlegierung nach einem der Ansprüche 1 bis 16 und 60 bis 99 Gew.-% einer Polymermatrix gemäß Anspruch 19.

## Claims

1. Process for synthesizing an alloy based on a block copolymer comprising at least one rigid polyamide block PA, comprising the following steps:
- I- production of at least one polyamide block PA;
- II- polycondensation of at least one soft block SB having a glass transition temperature Tg below 15°C, with said at least one polyamide block PA so as to obtain a block copolymer; and
- III- recovery of said block copolymer alloy,
step III comprising the following substeps:
- III-1- adjustment of the viscosity of the copolymer alloy,
- III-2- extrusion of the copolymer alloy, and
- III-3- stoving of the alloy,
and comprising the addition to the block copolymer, during step III, of 0.1% to 30% by weight of at least one organic salt in the molten state, relative to the total weight of alloy; such that the alloy obtained has improved antistatic properties and identical mechanical properties compared with the same copolymer produced without adding an organic salt,
the organic salt being added to the block copolymer, during step III-3, by means of an impregnation liquid containing the organic salt pure or diluted in a solvent.

2. Process according to Claim 1, in which said at least one organic salt comprises at least one cation comprising at least one of the following molecules: ammonium, sulfonium, pyridinium, pyrrolidinium, imidazolium, imidazolinium, phosphonium, lithium, guanidinium, piperidinium, thiazolium, triazolium, oxazolium, pyrazolium, and mixtures thereof.

3. Process according to either of Claims 1 and 2, in which said at least one organic salt comprises at least one anion comprising at least one of the following molecules: imides, in particular bis(trifluoromethanesulfonyl)imide; borates, in particular tetrafluoroborate; phosphates, in particular hexafluorophosphate; phosphinates and phosphonates, in particular alkyl phosphonates; amides, in particular dicyanamide; aluminates, in particular tetrachloroaluminate; halides, such as bromide, chloride or iodide anions; cyanates; acetates, in particular trifluoroacetate; sulfonates, in particular methanesulfonate, trifluoromethanesulfonate; sulfates, in particular ethyl sulfate or hydrogen sulfate; and mixtures thereof.

4. Process according to any one of Claims 1 to 3, in which said step I comprises the polycondensation of polyamide precursors in the presence of a chain regulator.

5. Process according to any one of Claims 1 to 4, in which steps I and II are carried out simultaneously.

6. Process according to any one of Claims 1 to 5, also comprising the addition of agents which improve surface conductivity, during step I, II and/or III, said agents being chosen from: hygroscopic agents; fatty acids; lubricants; metals; metal film coatings; metal powders; metal nanopowders; aluminosilicates; amines, such as quaternary amines; esters; fibers; carbon black; carbon fibers; carbon nanotubes; polyethylene glycol; intrinsically conductive polymers, such as derivatives of polyaniline, of polythiophene or of polypyrrole; masterbatches; and mixtures thereof.

7. Process according to any one of Claims 1 to 6, also comprising the addition of additives and/or adjuvants during step I, II and/or III, said additives and/or adjuvants being chosen from: organic or inorganic fillers, reinforcing agents, plasticizers, stabilizers, antioxidants, anti-UV agents, flame retardants, carbon black, carbon nanotubes; mineral or organic dyes, pigments, dyes, demolding agents, lubricants, foaming agents, anti-impact agents, shrink-proofing agents, fire-retardants, nucleating agents, and mixtures thereof.

8. Block copolymer alloy having improved antistatic properties, comprising at least one rigid polyamide block and at least one soft block, which is obtained by means of the synthesis process of any one of Claims 1 to 7, said alloy incorporating from 0.1% to 30% by weight of at least one organic salt, relative to the total weight of the alloy, and in which the total polyethylene glycol PEG content is at least 50% by weight, relative to the total weight of the alloy, the proportion by weight of said at least one rigid polyamide block representing from 5% to 95%, preferably from 15% to 95%, the proportion by weight of said at least one soft block representing from 5% to 95%, preferably from 5% to 85%, relative to the total mass of the copolymer, said alloy comprising at least one polyether block comprising at least 50% by weight of PEG, relative to the total weight of polyether block(s).

9. Copolymer alloy according to Claim 8, in which said at least one rigid block and/or said at least one soft block are at least partially derived from renewable starting materials.

10. Alloy according to Claim 9, comprising a biocarbon content of at least 1%, which corresponds to a ¹⁴C/¹²C isotope ratio of at least 1.2 × 10⁻¹⁴.

11. Alloy according to Claim 10, comprising a biocarbon content of greater than 5%, preferably greater than 10%, preferably greater than 25%, preferably greater than 50%, preferably greater than 75%, preferably greater than 90%, preferably greater than 95%, preferably greater than 98%, preferably greater than 99%, advantageously substantially equal to 100%.

12. Copolymer alloy according to any one of Claims 8 to 11, in which said at least one polyamide block comprises at least one of the following molecules: PA12, PA11, PA10.10, PA6, PA6/12, a copolyamide comprising at least one of the following monomers: 11, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T, and mixtures or copolymers thereof.

13. Copolymer alloy according to any one of Claims 8 to 12, in which said at least one soft block is chosen from polyether blocks; polyester blocks; polysiloxane blocks, such as polydimethylsiloxane blocks; polyolefin blocks; polycarbonate blocks; and mixtures thereof.

14. Alloy according to any one of Claims 8 to 13, in which said copolymer comprises a PEBA.

15. Copolymer alloy according to Claim 14, in which said PEBA comprises PA12-PEG, PA6-PEG, PA6/12-PEG, PA11-PEG, PA12-PTMG, PA6-PTMG, PA6/12-PTMG, PA11-PTMG, PA12-PEG/PPG, PA6-PEG/PPG, PA6/12-PEG/PPG and/or PA11-PEG/PPG.

16. Copolymer alloy according to any one of Claims 8 to 15, in which the copolymer is a segmented block copolymer comprising three different types of blocks, said copolymer being chosen from copolyetheresteramides and copolyetheramideurethanes in which:
- percentage by weight of rigid polyamide block is greater than 10%;
- percentage by weight of soft block is greater than 20%;
relative to the total weight of copolymer.

17. Composition comprising a copolymer alloy according to any one of Claims 8 to 16, said alloy representing, by weight, from 5% to 100%, preferably from 5% to 70%, preferably from 5% to 30%, relative to the total mass of the composition.

18. Use of a block copolymer alloy according to any one of Claims 8 to 16 or of a composition according to Claim 17, in a thermoplastic polymer matrix for improving the antistatic properties of said matrix.

19. Use according to Claim 18, in which said polymer matrix comprises at least one thermoplastic polymer, which is a homopolymer or copolymer, chosen from: polyolefins, polyamides, fluoropolymers, saturated polyesters, polycarbonate, styrene resins, PMMA, thermoplastic polyurethanes (TPUs), copolymers of ethylene and of vinyl acetate (EVA), copolymers comprising polyamide blocks and polyether blocks, copolymers comprising polyester blocks and polyether blocks, copolymers comprising polyamide blocks, comprising polyether blocks and comprising polyester blocks, copolymers of ethylene and an alkyl (meth)acrylate, copolymers of ethylene and of vinyl alcohol (EVOH), of ABS, of SAN, of ASA, of polyacetal, polyketones, and mixtures thereof.

20. Composition comprising from 1% to 40% by weight of at least one block copolymer alloy according to any one of Claims 1 to 16 and from 60% to 99% by weight of a polymer matrix as defined in Claim 19.
